# EUROPEAN PATENT SPECIFICATION

(11) **EP 4 547 783 B1**
(45) Date of publication and mention of the grant of the patent: **04.03.2026**
(21) Application number: 23741438.8
(22) Date of filing: 30.06.2023
(51) Int. Cl.: C10G 3/00, C10G 45/62, C10G 47/02, C10G 45/72, B01J 8/00, C10G 2/00, C10G 47/36, C10G 45/64, C10G 65/12

(54) **A PROCESS FOR PRODUCING A LIQUID TRANSPORTATION FUEL COMPONENT**
VERFAHREN ZUR HERSTELLUNG EINER KOMPONENTE FÜR FLÜSSIGEN TRANSPORTKRAFTSTOFF
PROCÉDÉ DE PRODUCTION D'UN COMPOSANT DE CARBURANT DE TRANSPORT LIQUIDE

(30) Priority: 30.06.2022 FI 20225608
(43) Date of publication of application: 07.05.2025
(73) Proprietor: Neste Oyj, 02150 Espoo (FI)
(72) Inventor: LAMMINPÄÄ, Kaisa, 06101 Porvoo (FI); SUNTIO, Ville, 06101 Porvoo (FI); AALTO, Pekka, 06101 Porvoo (FI); TOPPINEN, Sami, 06101 Porvoo (FI); SIPPOLA, Väinö, 06101 Porvoo (FI); KHAN, Yaseen, 06101 Porvoo (FI)
(74) Representative: Espatent Oy
(86) International application number: PCT/FI2023/050412
(87) International publication number: WO 2024/003462

(56) References cited:
- US-A1- 2002 116 079
- US-A1- 2010 000 908
- US-B2- 8 039 682
- US-B2- 8 324 438

## Description

### TECHNICAL FIELD

The present disclosure generally relates to a process for producing renewable fuel components. The disclosure relates particularly, though not exclusively, to a process for producing at least one or more liquid transportation fuel components, preferably at least an aviation fuel component. Also, a system and computer program usable for running the process are disclosed.

### BACKGROUND

This section illustrates useful background information without admission of any technique described herein representative of the state of the art.

There is an ongoing need to reduce greenhouse gas emissions and/or carbon footprint in transportation, especially aviation. Accordingly, interest towards renewable aviation fuels and aviation fuel components is and has been growing.

Processes for producing aviation fuel components from renewable raw materials have been proposed. However, the yield of aviation fuel components (compared to other fuel components) has been relatively low in said processes. Also, there is a need to improve quality of renewable aviation fuel components. Particularly, there is an interest towards producing aviation fuel components that could be used in aviation fuels in elevated amounts, or when suitably additized even as such as an aviation fuel.

US2010/000908 relates to the manufacture of hydrocarbon components suitable as aviation fuels or jet fuels and as blending stocks for aviation fuels.

### SUMMARY

It is an aim to solve or alleviate at least some of the problems related to prior art. An aim is to improve quality of aviation fuel components obtainable from renewable sources. A further aim is to enable increasing the yield of an aviation fuel component. Another aim is to reduce formation of C1-C4 hydrocarbons, especially C1-C2 hydrocarbons, in a process for producing renewable liquid transportation fuel components. Yet further, an aim is to prolong hydroisomerisation catalyst lifetime in a process for producing renewable liquid transportation fuel components.

The appended claims define the scope of protection. Any examples and technical descriptions of apparatuses, products, systems, and/or methods in the description and/or drawings not covered by the claims are presented as examples useful for understanding the invention.

According to a first aspect of the invention, there is provided a process for producing at least one liquid transportation fuel component, the process comprising:
providing a paraffinic hydrocarbon feed comprising at least 60 wt-% paraffins of the total weight of the paraffinic hydrocarbon feed, of which paraffins at most 30 wt-% are isoparaffins;
subjecting the paraffinic hydrocarbon feed in a first reactor to hydroisomerisation in the presence of a hydroisomerisation catalyst to obtain a hydroisomerisation effluent;
   i) subjecting the hydroisomerisation effluent to fractionation to separate from the fractionation at least a recycle stream having a T5 temperature (5 vol-% recovered, EN ISO 3405-2019) of 270 °C or higher;
   ii) subjecting a second reactor feed comprising the recycle stream to hydrocracking in a second reactor in the presence of a hydrocracking catalyst to obtain a recycle effluent;
   iii) feeding the recycle effluent as a co-feed with the hydroisomerisation effluent to the fractionation, and recovering from the fractionation at least one or more liquid transportation fuel components; and
monitoring parameters indicative of deactivation of the hydroisomerisation catalyst to receive values;
comparing the received values with predetermined values; and
when the received values reach the predetermined values switching from i), ii), iii) to:
   I) subjecting a second reactor feed comprising the hydroisomerisation effluent to hydrocracking in the second reactor in the presence of the hydrocracking catalyst to obtain a hydrocracking effluent;
   II) subjecting the hydrocracking effluent to fractionation, and recovering from the fractionation at least one or more liquid transportation fuel components.

In certain embodiments, in steps iii) and II) at least one or more of an aviation fuel component, a diesel fuel component, a gasoline fuel component, and/or a marine fuel component is recovered from the fractionation, preferably at least an aviation fuel component, more preferably at least an aviation fuel component and a diesel fuel component or at least an aviation fuel component and a gasoline fuel component.

In certain preferred embodiments, in steps iii) and II) at least an aviation fuel component having density at 15 °C within a range from 730 to 772 kg/m³ (EN ISO 12185-1996), T10 temperature at most 205 °C (EN ISO 3405-2019), final boiling point at most 300 °C (EN ISO 3405-2019), flash point at least 38 °C (IP 170-2013, Abel closed-cup method), and freezing point at most - 40 °C (IP 529-2016) is recovered from the fractionation.

The present process is particularly suitable for producing aviation fuel component. The present process enables obtaining higher yield of aviation fuel component compared to conventional processes for producing fuel components by hydrodeoxygenation (HDO) and hydroisomerisation (HI) of renewable fats and oils. Also, the present process enables producing aviation fuel component with improved quality that is usable in aviation fuels in elevated amounts, or even as such when suitably additized, compared to aviation fuel components produced by the above-referred conventional processes. Further, the present process extends the hydroisomerisation (HI) catalyst lifetime, and enables utilisation of a broader range of feeds, including heavier and more impure feeds, compared to the above-referred conventional processes.

According to a second aspect of the invention, there is provided a system for producing at least one liquid transportation fuel component, wherein the system is configured to run a process using i), ii), iii) or I), II), III) of the system, the system comprising:
means configured to provide a paraffinic hydrocarbon feed comprising at least 60 wt-% paraffins of the total weight of the paraffinic hydrocarbon feed, of which paraffins at most 30 wt-% are isoparaffins;
a first reactor configured to subject the paraffinic hydrocarbon feed in the first reactor to hydroisomerisation in the presence of a hydroisomerisation catalyst to obtain a hydroisomerisation effluent;
a fractionation system configured to i) subject the hydroisomerisation effluent to fractionation to separate from the fractionation at least a recycle stream having a T5 temperature (5 vol-% recovered, EN ISO 3405-2019) of 270 °C or higher, and to subject a recycle effluent to fractionation (following ii) and iii)); and to II) subject a hydrocracking effluent to fractionation;
a second reactor configured to ii) subject a second reactor feed comprising the recycle stream to hydrocracking in the second reactor in the presence of a hydrocracking catalyst to obtain a recycle effluent; and to I) subject a second reactor feed comprising the hydroisomerisation effluent to hydrocracking in the second reactor in the presence of the hydrocracking catalyst to obtain a hydrocracking effluent;
conduit(s) configured to iii) feed the recycle effluent and the hydroisomerisation effluent to the fractionation system, and to III) feed the hydrocracking effluent to the fractionation system;
means configured to recover from the fractionation system at least one or more liquid transportation fuel components; and
a control apparatus configured to monitor parameters indicative of deactivation of the hydroisomerisation catalyst to receive values; to compare the received values with predetermined values; and when the received values reach the predetermined values to switch from i), ii), iii) to I), II), III) (of the system).

According to a third aspect of the invention, there is provided a computer program product comprising instructions which, when executed by a processor of a control apparatus in a system for producing at least one liquid transportation fuel component, cause in a process according to the first example aspect the control apparatus to compare the received values with predetermined values, and when the received values reach the predetermined values to switch from i), ii), iii) to I), II). The computer program product may cause a control device or control apparatus in a system for producing at least one liquid transportation fuel component to perform of the process as defined as the first example aspect at least the steps of comparing the received values with predetermined values; and switching from i), ii), iii) to I), II).

The computer program product according to the third aspect enables the process as defined as the first example aspect to be operated more precisely, monitoring a higher number of different parameters, comparing the obtained values to huge datasets, using the obtained values in complex models, adjusting, and/or switching the process quicker based on the comparison, improving or adjusting the yields and/or quality of the recovered liquid transportation fuel component(s) depending on the need, and enhancing safety of the present process, just to name a few advantages.

Different non-binding example aspects and embodiments have been illustrated in the foregoing. The embodiments in the foregoing are used merely to explain selected aspects or steps that may be utilised in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 schematically shows a process according to an example embodiment before switching from i), ii), iii) to I), II), i.e. running according to an example embodiment of i), ii), iii) (first mode); and
Fig. 2 schematically shows a process according to an example embodiment after having switched from i), ii), iii) to I), II), i.e. running according to an example embodiment of I), II) (second mode).

### DETAILED DESCRIPTION

In the following description, like reference signs denote like elements or steps.

All standards referred to herein are the latest revisions available at the filing date, unless otherwise mentioned.

Unless otherwise stated, regarding distillation characteristics, such as initial boiling points (IBP), final boiling points (FBP), T5 temperature (5 vol-% recovered), T95 temperature (95 vol-% recovered), and boiling ranges, reference is made to EN ISO 3405-2019. IBP is the temperature at the instant the first drop of condensate falls from the lower end of the condenser tube, and FBP is the maximum thermometer reading obtained during the test, usually occurring after the evaporation of all liquid from the bottom of the flask. For boiling point distribution reference may also be made to GC-based method (simdis) ASTM D2887-19e1, or for gasoline range hydrocarbons to ASTM D7096-19.

As used in the context of this disclosure, aviation fuel component refers to hydrocarbon compositions suitable for use in fuel compositions meeting standard specifications for aviation fuels, such as specifications laid down in ASTM D7566-21. Typically, such aviation fuel components boil, i.e. have IBP and FBP, within a range from about 100 °C to about 300 °C, such as within a range from about 150 °C to about 300 °C, as determined according to EN ISO 3405-2019.

As used in the context of this disclosure, diesel fuel component refers to hydrocarbon compositions suitable for use in fuel compositions meeting standard specifications for diesel fuels, such as specifications laid down in EN 590:2022 or in EN 15940:2016 + A1:2018 + AC:2019. Typically, such diesel fuel components boil, i.e. have IBP and FBP, within a range from about 160 °C to about 380 °C, as determined according to EN ISO 3405-2019.

As used in the context of this disclosure, gasoline fuel component or naphtha refers to hydrocarbon components suitable for use in fuel compositions meeting standard specifications for gasoline fuels, such as specifications laid down in EN 228-2012 + A1-2017. Typically, such gasoline fuel components boil, i.e. have IBP and FBP, within a range from about 25 °C to about 210 °C, as determined according to EN ISO 3405-2019.

As used in the context of this disclosure, marine fuel component refers to hydrocarbon components suitable for use in fuel compositions meeting standard specifications for marine fuels, such as specifications laid down in ISO 8217-2017. Typically, such marine fuel components boil, i.e. have IBP and FBP, within a range from about 180 °C to about 600 °C, such as from about 180 °C to about 400 °C, as determined according to EN ISO 3405-2019.

As used herein hydrocarbons refer to compounds consisting of carbon and hydrogen. Hydrocarbons of particular interest in the present context comprise paraffins, n-paraffins, i-paraffins, monobranched i-paraffins, multiple-branched i-paraffins, olefins, naphthenes, and aromatics. Oxygenated hydrocarbons refer herein to hydrocarbons comprising covalently bound oxygen.

As used herein paraffins refer to non-cyclic alkanes, i.e. non-cyclic, open chain saturated hydrocarbons that are linear (normal paraffins, n-paraffins) or branched (isoparaffins, i-paraffins). In other words, paraffins refer herein to n-paraffins and/or i-paraffins.

In the context of the present disclosure, i-paraffins refer to branched open chain alkanes, i.e. non-cyclic, open chain saturated hydrocarbons having one or more alkyl side chains. Herein, i-paraffins having one alkyl side chain or branch are referred to as monobranched i-paraffins and i-paraffins having two or more alkyl side chains or branches are herein referred to as multiple-branched i-paraffins. In other words, i-paraffins refer herein to monobranched i-paraffins and/or multiple-branched i-paraffins. The alkyl side chain(s) of i-paraffins may for example be C1-C9 alkyl side chain(s), preferably methyl side chain(s). The amounts of monobranched and multiple-branched i-paraffins may be given separately. The term "i-paraffins" refers to sum amount of any monobranched i-paraffins and any multiple-branched i-paraffins, if present, indicating the total amount of any i-paraffins present regardless the number of branches. Correspondingly, "paraffins" refers to sum amount of any n-paraffins, any mono-branched, and any multiple-branched i-paraffins, if present.

In the context of the present disclosure, olefins refer to unsaturated, linear, branched, or cyclic hydrocarbons, excluding aromatic compounds. In other words, olefins refer to hydrocarbons having at least one unsaturated bond, excluding unsaturated bonds in aromatic rings.

As used herein, cyclic hydrocarbons refer to all hydrocarbons containing cyclic structure(s), including cyclic olefins, naphthenes, and aromatics. Naphthenes refer herein to cycloalkanes i.e. saturated hydrocarbons containing at least one cyclic structure, with or without side chains. As naphthenes are saturated compounds, they are compounds without aromatic ring structure(s) present. Aromatics refer herein to hydrocarbons containing at least one aromatic ring structure, i.e. cyclic structure having delocalized, alternating π bonds all the way around said cyclic structure.

In the context of the present disclosure, for compositions boiling at 36°C or higher (at standard atmospheric pressure), contents of n-paraffins, i-paraffins, monobranched i-paraffins, various multiple-branched isoparaffins, naphthenes, and aromatics, are expressed as weight % (wt-%) relative to the degassed weight of the feed, stream, effluent, product, component or sample in question or, when so defined, as weight-% (wt-%) relative to the (total) weight of paraffins or (total) weight of i-paraffins of the feed, stream, effluent, product, component, or sample in question. Said contents can be determined by GCxGC-FID/GCxGC-MS method, preferably conducted as follows: GCxGC (2D GC) method was run as generally disclosed in UOP 990-2011 and by Nousiainen M. in the experimental section of his Master's Thesis *Comprehensive two-dimensional gas chromatography with mass spectrometric and flame ionization detectors in petroleum chemistry,* University of Helsinki, August 2017, with the following modifications. The GCxGC was run in reverse mode, using a semipolar column (Rxi17Sil) first and a nonpolar column (Rxi5Sil) thereafter, followed by FID detector, using run parameters: carrier gas helium 31.7 cm/sec (column flow at 40 °C 1.60 ml/min); split ratio 1:350; injector 280 °C; Column T program 40 °C (0 min) - 5 °C/min - 250 °C (0 min) - 10 °C/min - 300 °C (5 min), run time 52 min; modulation period 10 sec; detector 300 °C with H₂ 40 ml/min and air 400 ml/min; makeup flow helium 30 ml/min; sampling rate 250 Hz and injection size 0.2 microliters. Individual compounds were identified using GCxGC-MS, with MS-parameters: ion source 230 °C; interface 300 °C; scan range 25 - 500 amu; event time (sec) 0.05; scan speed 20000. Commercial tools (Shimadzu's LabSolutions, Zoex's GC Image) were used for data processing including identification of the detected compounds or hydrocarbon groups, and for determining their mass concentrations by application of response factors relative to n-heptane to the volumes of detected peaks followed by normalization to 100 wt-%. Olefins were lumped with naphthenes and heteroatomic species with aromatics, unless separately reported. The limit of quantitation for individual compounds of this method is 0.1 wt-%.

In the context of the present disclosure, various characteristics of the feeds, streams, effluents, products, components, or samples are determined according to the standard methods referred to or disclosed herein, as properly prepared. For example, cloud point is determined according to ASTM D 5771-17 from a degassed feed, stream, effluent, product, component, or sample.

Typically, the various paraffinic feeds, streams, effluents, and fuel components as recovered products or fractions thereof, referred to herein, may comprise in addition to hydrocarbons, also varying trace amounts of e.g. heteroatom-containing hydrocarbons and inorganic compounds as impurities, and the oxygenated hydrocarbon feed varying amounts of e.g. other heteroatom-containing hydrocarbons and inorganic compounds as impurities. Generally, the level of impurities in the main process streams is highest in the first parts of the process and decreases subsequently being negligible or even below detection limit in the recovered liquid transportation fuel component(s).

In the context of this disclosure, feed(s) to reactors, particularly to the first reactor and/or the second reactor, are defined so that H₂ possibly fed to the respective reactor, for example H₂ fed to the hydroisomerisation and H₂ fed to the hydrocracking, is excluded from the definition of the feed(s).

As used herein, hydroisomerisation (HI) effluent refers to total HI effluent, degassed HI effluent, or degassed and stabilised HI effluent, as the case may be, and the term HI effluent may encompass each of these.

In the context of this disclosure, CX+ paraffins, CX+ n-paraffins, CX+ i-paraffins, CX+ mono-branched i-paraffins, CX+ multiple-branched i-paraffins, CX+ hydrocarbons, or CX+ fatty acids refer to paraffins, n-paraffins, i-paraffins, mono-branched i-paraffins, multiple-branched i-paraffins, hydrocarbons, or fatty acids, respectively, having a carbon number of at least X, where X is any feasible integer. It is understood that every compound falling within the definition is not necessarily present.

In the context of this disclosure, CY- paraffins, CY- n-paraffins, CY- i-paraffins, CY- mono-branched i-paraffins, CY- multiple-branched i-paraffins, CY- hydrocarbons, or CY- fatty acids refer to paraffins, n-paraffins, i-paraffins, mono-branched i-paraffins, multiple-branched i-paraffins, hydrocarbons, or fatty acids, respectively, having a carbon number of at most Y, wherein Y is any feasible integer. It is understood that every compound falling within the definition is not necessarily present.

In the context of this disclosure, CX_{Y}-CX_{Z} (or CXy to CX_{Z}) paraffins, CX_{Y}-CX_{Z} n-paraffins, CXy-CX_{Z} i-paraffins, CX_{Y}-CX_{Z} mono-branched i-paraffins, CX_{Y}-CX_{Z} multiple-branched i-paraffins, CX_{Y}-CX_{Z} hydrocarbons, or CX_{Y}-CX_{Z} fatty acids refer to a range of paraffins, n-paraffins, i-paraffins, mono-branched i-paraffins, multiple-branched i-paraffins, hydrocarbons, or fatty acids, respectively, where X_{Y} and X_{Z} are feasible end-value integers, wherein the carbon numbers within such range is as indicated by the end-value integers and any integers between said end-values, if present. However, paraffins, n-paraffins, i-paraffins, mono-branched i-paraffins, multiple-branched i-paraffins, hydrocarbons, or fatty acids, as the case may be, of all said carbon numbers within said range, particularly at or around the end points are not necessarily present, except when so expressly indicated. On the other hand, isomers, by definition, may comprise several compounds having the same carbon number, such as C15 isomers may comprise methyltetradecanes (different position of the methyl-branch), dimethyltridecanes (different positions of the two methyl-branches), etc, wherein "C15 isomers" comprises the sum amount of all such variants.

Typically, a sum amount as of weight or volume of paraffins, n-paraffins, i-paraffins, mono-branched i-paraffins, multiple-branched i-paraffins, hydrocarbons, or fatty acids, as defined each time, of all carbon numbers included is meant. For example, C15 to C22 n-paraffins refers to any n-paraffins within said range, such as C15, C16, C17, C18, C19, C20, C21, and C22 n-paraffins, even if the content of C15 n-paraffins was zero. In other words, a sum amount is obtainable by addition of 0 (referring to absent C15 n-paraffins) to the sum weight of all other C15 to C22 n-paraffins present.

Isomerisation converts at least a certain amount of n-paraffins to i-paraffins, especially to mono-branched i-paraffins. By (further) raising the isomerization degree, for example by increasing severity of the hydroisomerisation as described hereinafter, more n-paraffins can be converted to i-paraffins, and mono-branched i-paraffins can be converted to multiple-branched i-paraffins, such as di-branched, and/or tri-branched i-paraffins, even i-paraffins comprising more than three branches.

As used herein and in the context of the second reactor, degree of effective cracking refers to cracking that yields non-gaseous (NTP) cracking products, and especially as expressed herein as the ratio of the C8 to C14 hydrocarbon content in the hydrocracking effluent (step I)) or recycle effluent (step ii)) to the C8 to C14 hydrocarbon content in the second reactor feed.

As used herein, wherever the reaction steps are defined to take place in "reactors", such as the first reactor and second reactor, said expression is used for illustrative purposes mainly. A person skilled in the art contemplates that any "reactor" is in practice implemented as a reactor system that may consist of one or more reactors. Whether the reactors are actually arranged in a single reactor or several reactors is a matter of engineering, and may be influenced by practical issues such as maximum height of the facility at the site, reactor diameter, regulatory and maintenance issues at the site, wind conditions at the site, and/or available equipment. Analogously, the "fractionation" may take place in a fractionation system, typically comprising e.g. separation and distillation units, which may be arranged according to conventional engineering practice in the field.

Catalyst characteristics, such as total number of acid sites, refers in the context of this disclosure to the catalyst characteristics in their ready-to-use state, in the beginning of the present process.

As used herein, the term catalyst deactivation refers to decreased activity of the catalyst (reflected by the amount of unconverted feed in the reactor effluent) and/or decreased selectivity of the catalyst (reflected by decreased amount of desired reaction products in the reactor effluent) at a given time point (tₙ), compared to the activity and/or selectivity of the catalyst in the beginning of the present process (t₀). As used herein, the term catalyst deactivation is not limited to any specific deactivation type or mechanism, although the catalyst deactivation observed in the present process is generally believed to be attributed to poisoning and fouling phenomena, and encompasses both reversible and irreversible deactivation.

As used herein, the term renewable refers to compounds or compositions that are obtainable, derivable, or originating from plants and/or animals, including compounds or compositions obtainable, derivable, or originating from fungi and/or algae, in full or in part. As used herein, renewable compounds or compositions may comprise gene manipulated compounds or compositions. Renewable feeds, components, compounds, or compositions may also be referred to as biological feeds, components, compounds, or compositions, or as biogenic feeds, components, compounds, or compositions.

As used herein, the term fossil refers to compounds or compositions that are obtainable, derivable, or originating from naturally occurring non-renewable compositions, such as crude oil, petroleum oil/gas, shale oil/gas, natural gas, or coal deposits, and the like, and combinations thereof, including any hydrocarbon-rich deposits that can be utilised from ground/underground sources.

The term circular refers to recycled material typically originating from non-renewable sources. For example, the term circular may refer to recycled material originating from waste plastics. Said renewable, circular, and fossil compounds or compositions are considered differing from one another based on their origin and impact on environmental issues. Therefore, they may be treated differently under legislation and regulatory framework. Typically, renewable, circular, and fossil compounds or compositions are differentiated based on their origin and information thereof provided by the producer.

Chemically the renewable or fossil origin of any organic compounds, including hydrocarbons, can be determined by suitable method for analysing the content of carbon from renewable sources e.g. DIN 51637 (2014), ASTM D6866 (2020) and EN 16640 (2017). Said methods are based on the fact that carbon atoms of renewable or biological origin comprise a higher number of unstable radiocarbon (¹⁴C) atoms compared to carbon atoms of fossil origin. Therefore, it is possible to distinguish between carbon compounds derived from renewable or biological sources or raw material and carbon compounds derived from non-renewable or fossil sources or raw material by analysing the ratio of ¹²C and ¹⁴C isotopes. Thus, a particular ratio of said isotopes can be used as a "tag" to identify a renewable carbon compound and differentiate it from non-renewable carbon compounds. The isotope ratio does not change in the course of chemical reactions. Therefore, the isotope ratio can be used for identifying renewable compounds, components, and compositions, and distinguishing them from non-renewable, fossil materials in reactor feeds, reactor effluents, separated product fractions, and various blends thereof. Numerically, the biogenic carbon content can be expressed as the amount of biogenic carbon in the material as a weight percent of the total carbon (TC) in the material (in accordance with ASTM D6866 (2020) or EN 16640 (2017)). In the present context, the term renewable preferably refers to a material having a biogenic carbon content of more than 50 wt-%, especially more than 60 wt-% or more than 70 wt-%, preferably more than 80 wt-%, more preferably more than 90 wt-% or more than 95 wt-%, even more preferably about 100 wt-%, based on the total weight of carbon in the material (EN 16640 (2017)).

According to a first example aspect, herein is provided a process for producing at least one liquid transportation fuel component, the process comprising:
providing a paraffinic hydrocarbon feed comprising at least 60 wt-% paraffins of the total weight of the paraffinic hydrocarbon feed, of which paraffins at most 30 wt-% are isoparaffins;
subjecting the paraffinic hydrocarbon feed in a first reactor to hydroisomerisation in the presence of a hydroisomerisation catalyst to obtain a hydroisomerisation effluent;
   i) subjecting the hydroisomerisation effluent to fractionation to separate from the fractionation effluent at least a recycle stream having a T5 temperature (5 vol-% recovered, EN ISO 3405-2019) of 270 °C or higher;
   ii) subjecting a second reactor feed comprising the recycle stream to hydrocracking in a second reactor in the presence of a hydrocracking catalyst to obtain a recycle effluent;
   iii) feeding the recycle effluent as a co-feed with the hydroisomerisation effluent to the fractionation, and recovering from the fractionation at least one or more liquid transportation fuel components; and
monitoring parameters indicative of deactivation of the hydroisomerisation catalyst to receive values; comparing the received values with predetermined values; and when the received values reach the predetermined values switching from i), ii), iii) to:
   I) subjecting a second reactor feed comprising the hydroisomerisation effluent to hydrocracking in the second reactor in the presence of the hydrocracking catalyst to obtain a hydrocracking effluent;
   II) subjecting the hydrocracking effluent to fractionation, and recovering from the fractionation at least one or more liquid transportation fuel components.

Preferably, the present process is a continuous process.

The process as operated according to steps i), ii), iii), may be referred to as the initial/first mode of the process/operation, and the process as operated according to steps I), II), may be referred to as the switched/second mode of the process/operation.

The first example aspect provides a process for producing at least one liquid transportation fuel component, wherein in the first mode of running the process a paraffinic hydrocarbon feed may be converted to a hydroisomerisation effluent, fractionated, and a fraction thereof recycled via second hydrocracking reactor back to the fractionation from which a liquid transportation fuel component, preferably an aviation fuel component, may be recovered. In the process, parameters indicative of deactivation of a hydroisomerisation catalyst are monitored and when these reach predetermined values, the process may be switched to a second mode of running wherein the hydroisomerisation effluent may be subjected to hydrocracking and the obtained hydrocracking effluent fractionated to yield a liquid transportation fuel component, preferably an aviation fuel component.

The at least one or more liquid transportation fuel component(s) recovered from the fractionation may be one or more of an aviation fuel component, a diesel fuel component, a gasoline fuel component, and/or a marine fuel component. Preferably, at least an aviation fuel component is recovered, more preferably at least an aviation fuel component and a diesel fuel component, or at least an aviation fuel component and a gasoline fuel component are recovered.

With the present process it is possible to obtain higher yield of aviation fuel component throughout the hydroisomerisation (HI) catalyst lifetime without a need to reduce the capacity of the HI in the first reactor, and/or to improve quality of the aviation fuel component, compared for example to conventional processes for producing fuel components by hydrodeoxygenation (HDO) and HI of renewable fats and oils.

With the present process it is possible to produce, even towards the end of the HI catalyst lifetime, an aviation fuel component having excellent cold properties and hence usable in aviation fuels with high blending ratio or even as such, i.e. unblended, when suitably additised. Also, the present process enables extending the HI catalyst lifetime and enables utilisation of a broader range of feeds, including heavier and more impure feeds, compared to conventional processes for producing fuel components by HDO and HI of renewable fats and oils.

Furthermore, the present process enables flexible adjustment of product selectivity towards the various liquid transportation fuel components, such as gasoline fuel component, aviation fuel component, diesel fuel component, and/or marine fuel component based on e.g. market dynamics, even towards the end of the HI catalyst lifetime.

The present process suggests subjecting the HI effluent or portion thereof to hydrocracking (HC), which hydrocracking cracks longer paraffin chains for example to paraffins boiling in the aviation fuel range, and may even isomerise n-paraffins in the HC feed as well as n-paraffins formed in the course of cracking reactions, and further isomerise isoparaffins by increasing the number of branches in isoparaffin molecules e.g. producing multiple-branched isoparaffins. The hydrocracking may increase the yield of an aviation fuel component as well as improve its quality, for example its cold properties, especially lower its freezing point and/or viscosity at subzero temperatures, such as at -20 °C.

During continued operation of catalytic hydroisomerisation, the HI catalyst deactivates gradually for example due to impurities in process streams and coking. The present process is highly flexible and involves various possibilities to adjust the yield and/or quality of the recovered liquid transportation fuel component(s), and to prolong the lifetime particularly of the HI catalyst. Adjusting the amount of the recycle stream subjected to hydrocracking, and/or the amount of heavies (heavy molecules) removed from the process as diesel fuel, marine fuel, or other heavy product component, are convenient means for adjusting the yield and/or quality of the recovered liquid transportation fuel component(s), and to respond to the catalyst deactivation, and/or changing market needs. Additionally, when subjecting to hydrocracking for example just the recycle stream i.e. just a heavy fraction of the HI effluent, no gaseous impurities typically present in the gaseous phase of the HI effluent get into contact with the hydrocracking (HC) catalyst. The various possibilities of the present process to compensate particularly the HI catalyst deactivation enable use of paraffinic hydrocarbon feeds with higher impurity content compared to conventional processes for producing liquid fuel components by HDO and HI of renewable fats and oils. Also, the hydrocracking step enables use of feeds comprising heavier and longer chain molecules compared to said conventional processes for producing liquid fuel components, typically diesel components, while being able to produce lower-boiling liquid transportation fuel components, such as aviation fuel component and/or gasoline fuel component, with good yields and quality.

The present process comprises monitoring parameters indicative of deactivation of the HI catalyst to receive values; comparing the received values with predetermined values; and when the received values reach or equal the predetermined values switching from i), ii), iii) to I), II), i.e. switching from the first mode to the second mode. Preferably, the received values are compared with corresponding predetermined values. Switching from i), ii), iii) to I), II) enables compensating HI catalyst deactivation allowing good yield and quality of the recovered at least one liquid transportation fuel component for a longer period before a need to change or regenerate the HI catalyst in the first reactor.

Initially, in the beginning of a process run, typically the activity of the HI catalyst is good or sufficient and the received values from the monitoring do not equal the (corresponding) predetermined values. However, at some point during the process run the deactivation of the HI catalyst has typically reached a point when the received values from the monitoring reaches the (corresponding) predetermined values, which predetermined values have been identified to represent insufficient or near-insufficient performance of the HI catalyst, for example in terms of volumes (yields), and/or compositional, and/or physico-chemical characteristics of the recovered liquid transportation fuel component(s). At that point, when the received values from the monitoring reaches the (corresponding) predetermined values, switching from i), ii), iii) to I), II) is performed typically in order to restore, and preferably even exceed, the targeted minimum for the process performance. By switching from i), ii), iii) to I), II) the process may be operated longer producing the desired liquid transportation fuel component(s) in desired quantity and with desired quality.

In certain embodiments, the present process may include in addition to switching from the first mode to the second mode, adjusting one or more operating conditions of the first reactor and/or the second reactor to reach, maintain, or even exceed targeted minimum for the process performance. In such embodiments, switching from the first mode to the second mode may be performed at some point after operating conditions of the first reactor and/or the second reactor have been adjusted, at one or more occasions. Operating conditions may be adjusted to their feasible extreme(s) and then the switching is performed, or alternatively, operating conditions may be adjusted to some extent and the switching is performed already before extremes are reached. Said adjusting of one or more operating conditions may be based on same or different parameters than the switching from i), ii), iii) to I), II). Preferably, one or more operating conditions of the first reactor and/or second reactor, particularly the first reactor, are first adjusted to compensate for catalyst deactivation, especially HI catalyst deactivation, and when compensating for catalyst deactivation by merely adjusting operating conditions in the first reactor and/or second rector is no longer feasible (or no longer desired), the switching from i), ii), iii) to I), II) is performed. In certain embodiments, after the switching from i), ii), iii) to I), II), operating conditions of the first reactor may be relieved, when the HI effluent is fed substantially completely to the second reactor for hydrocracking, and thus the targeted yield and/or quality of the recovered fuel component(s) may be achieved for example at lower temperature and/or higher WHSV in the first reactor, than just before switching. In these embodiments, after switching, it may be beneficial to increase the temperature in the second reactor to compensate for the typically increased WHSV therein. In the course of the second mode of operation, one or more operating conditions of the first reactor and/or the second reactor may (again) be adjusted to compensate for further catalyst deactivation, particularly deactivation of the HI catalyst in the first reactor.

When the process has been operated long enough in the switched mode I), II), and operating conditions in the first reactor and/or the second reactor have optionally been adjusted to their feasible extreme(s), the targeted performance of the process, for example in terms of yields, and/or compositional, and/or physico-chemical characteristics of the recovered liquid transportation fuel component(s), will no longer be reached due to extent of catalyst deactivation. Then typically the catalyst(s) is changed to fresh one(s) or regenerated before optionally starting to operate the process in the first mode, i.e. running sequence i), ii), iii).

In certain embodiments, the process does not comprise, i.e. is performed without, adjusting operating conditions to compensate for catalyst deactivation, and deactivation of the HI catalyst in the first reactor is compensated for by switching from i), ii), iii) to I), II). In such embodiments, the total feasible run time of the process may be shorter than in embodiments wherein, in addition to switching from i), ii), iii) to I), II), also operating conditions of at least the first reactor are adjusted.

Further variants of the present process may comprise switching from I), II) back to i), ii), iii), and thereafter operating the first and/or second reactor adjusting operating conditions to compensate for the deactivation of at least the HI catalyst. Again, operating conditions may be adjusted to their feasible extreme(s) and then switched from i), ii), iii) to I), II), or alternatively, operating conditions may be adjusted to some extent and switching from i), ii), iii) to I), II) performed already before extremes reached.

An example sequence applying these variants comprises running the process in the first mode, and adjusting operating conditions at most to feasible extremes; thereafter switching to the second mode and adjusting operating conditions at most to feasible extremes; then switching back, i.e. from I), II) to i), ii), iii), and running until target is no longer met despite of adjusting operation conditions, and then switching from i), ii), iii) to I), II) and running until target no longer met despite of adjusting operation conditions, which leads to regeneration or change of the catalyst(s).

The first and the second mode of operation, in combination with appropriate temperatures and other operating conditions in the first and the second reactors, provide a possibility to adjust the process flexibly in order to meet and even optimise the targeted yields and/or qualities of various recovered components.

In certain preferred embodiments of the present process, in step ii) a portion of the hydroisomerisation effluent is fed as a co-feed with the recycle stream (as part of the second reactor feed) to hydrocracking in the second reactor; and/or in step II) a portion of the hydroisomerisation effluent is fed as a co-feed with the hydrocracking effluent to fractionation. In these embodiments the portions may be obtained e.g. by simply splitting the total or degassed HI effluent between the second reactor and the fractionation, using e.g. a fixed or preferably gradually adjusted ratio. These embodiments provide further flexibility for operating the present process, and possibility to adjust the process even more precisely in order to meet targeted yields and qualities of more than one recovered component at a time. In this way it may be possible to avoid situations where targeted yield and quality of one recovered fuel component are met but at the expense of producing over-quality of another recovered fuel component (e.g. producing a diesel fuel component having unnecessarily low cloud point). Splitting the HI effluent may also be beneficial when switching the process from i), ii), iii) to I), II), providing a smooth transition between the modes. For example, switching from i), ii), iii) to I), II) may comprise, starting from i), ii), iii), feeding a gradually decreasing portion of the HI effluent to the fractionation and at the same time feeding a gradually increasing portion of the HI effluent as a co-feed with the recycle stream (as part of the second reactor feed) to hydrocracking, until essentially the whole (degassed) HI effluent is fed thereto, i.e. the process is operated according to I), II).

In embodiments, where a portion of the hydroisomerisation effluent is in step II) fed as a co-feed with the hydrocracking effluent to fractionation, the amount of such portion of the HI effluent in step II) may vary but is generally just a minor portion (outside of the switching). For example, the portion of the HI effluent optionally fed in step II) to the fractionation as a co-feed with the hydrocracking effluent may be less than 50 wt-%, preferably less than 30 wt-%, more preferably less than 10 wt-% of the HI effluent.

In the present process parameters indicative of deactivation of the HI catalyst are monitored to receive values, the comparison of which to predetermined values may be used, in addition to initiation of any switching, to select appropriate adjustments for operating conditions in the first reactor and optionally in further process units.

The parameters indicative of deactivation of the HI catalyst may be selected freely, but preferably at least two of the monitored parameters belong to one or more of the following items a, b, c, d, e, f, g, h, and/or i. For example, two of the parameters may be selected from one of the items and more parameters from the other items, or one of the parameters may be selected from one of the items and at least one more parameter from the other items. Hence, in certain preferred embodiments, the parameters indicative of deactivation of the HI catalyst comprise at least two or more of:
a. content of an impurity in the paraffinic hydrocarbon feed, preferably content of at least one or more of N, S, O, P, Si, Cl, Fe, alkali metals, alkaline earth metals, and/or coke-forming compounds in the paraffinic hydrocarbon feed; Said species or impurities are known catalyst deactivators, particularly deactivators of non-sulphided bifunctional HI catalysts comprising noble metal(s). Also, said species or impurities are commonly present in varying amounts in feeds derived from vegetable oils, animal fats, microbial oils, thermally and/or enzymatically liquefied organic waste and residues as well as in feeds derived from Fischer-Tropsch process, and may hence in certain embodiments be carried-over in varying amounts to and be present in the paraffinic hydrocarbon feed. Typically, the elemental impurities are not present as such in the paraffinic hydrocarbon feed, but contents thereof indicate presence of compounds comprising said impurities. Elemental impurities and coke-forming compounds are determined by standard laboratory analyses. Increased content of any of these impurities may lead to increased catalyst deactivation.
b. content of NH₃ and/or H₂S in the gaseous phase of the hydroisomerisation effluent; In some cases, increased content of NH₃ and/or H₂S in the gaseous phase of the hydroisomerisation effluent could indicate increased catalyst exposure to said impurities. Increased content of any of these impurities may lead to increased catalyst deactivation.
c. physico-chemical characteristics of the hydroisomerisation effluent, preferably at least one or more of a cloud point, freezing point, pour point, cold filter plugging point, kinematic viscosity, density, and/or a distillation characteristic; Increase in any of cloud point, freezing point, pour point, cold filter plugging point, kinematic viscosity, and/or density may indicate increased catalyst deactivation. Distillation characteristics, wherein an increase may be indicative of catalyst deactivation, comprise T5, T50, FBP etc. As to further distillation characteristics, a shift of boiling point distribution to higher boiling compounds, may be indicative of catalyst deactivation.
d. compositional characteristics of the hydroisomerisation effluent, preferably at least one or more of content of isoparaffins, content of C8-C14 hydrocarbons, content of multiple-branched isoparaffins, and/or content of C1-C4 hydrocarbons in the hydroisomerisation effluent; Decrease in content of isoparaffins, multiple-branched isoparaffins, and/or C8-C14 hydrocarbons may indicate increased catalyst deactivation. Content of C1-C4 hydrocarbons may decrease along with increased catalyst deactivation. However, increasing operating temperature to compensate catalyst deactivation may lead to increase in C1-C4 hydrocarbon content.
e. yield of at least one or more of the recovered liquid transportation fuel component(s) and/or the separated recycle stream, preferably yield of an aviation fuel component; Increased yield of higher boiling hydrocarbons and increased volume of the recovered recycle stream may indicate increased catalyst deactivation.
f. physico-chemical characteristics of at least one or more of the recovered liquid transportation fuel components and/or the separated recycle stream, preferably at least one or more of a cloud point, freezing point, pour point, cold filter plugging point, kinematic viscosity, density, research octane number (RON), cetane number, and/or a distillation characteristic; A decrease in cetane may indicate increased catalyst deactivation. Among distillation characteristics, an increase e.g. in T5, T50, T95, FBP etc. may be indicative of catalyst deactivation. As to further distillation characteristics, a shift of boiling point distribution to higher boiling compounds, may be indicative of catalyst deactivation. To some extent the physico-chemical characteristics may be indicative of, or correlate with, the content of isoparaffins or multiple-branched isoparaffins in the recovered liquid transportation fuel component(s) and/or the separated recycle stream
g. compositional characteristics of at least one or more of the recovered liquid transportation fuel components and/or of the separated recycle stream, preferably content of isoparaffins and/or content of multiple-branched isoparaffins in one or more of the recovered liquid transportation fuel component(s) and/or in the separated recycle stream; Decrease in content of isoparaffins, multiple-branched isoparaffins, and C8-C14 hydrocarbons may indicate increased catalyst deactivation. To some extent the content of isoparaffins or multiple-branched isoparaffins can be indicative of, or correlate with, the physico-chemical characteristics of the recovered liquid transportation fuel component(s) and/or the separated recycle stream.
h. temperature difference over the first reactor, or over one or more catalyst bed therein; Said temperature differences are relatively easy to monitor, and a decrease in temperature difference may indicate increased catalyst deactivation.
   and/or
i. operating condition(s) in the first reactor selected from temperature, pressure, weight hourly space velocity (WHSV), H₂ to paraffinic hydrocarbon feed ratio, and/or H₂ partial pressure at the inlet of the first reactor. For example, temperature and/or WHSV and/or pressure may already have needed adjusting during continued operation of the process to compensate for the HI catalyst deactivation, so increased temperature, decreased WHSV, and/or increased pressure may indicate increased catalyst deactivation. Conveniently the temperature in the reactor is as measured at the reactor inlet.

Active sites of the HI catalyst may be occupied, and catalyst pores blocked by the impurities and coke, so that the sites are not available for catalysis anymore. For example, coke is caused by coke-forming compounds, such as olefins, aromatics and naphthenes, and coke formation may be enhanced by further impurities, when present in the paraffinic hydrocarbon feed. For impurities causing reversible catalyst deactivation it may be sufficient to monitor the total content of such impurity or impurities in the feed, as that may give indication of expected catalyst deactivation. For some other impurities, especially those causing irreversible catalyst deactivation, one may need to monitor the content of one or more of such impurities in the paraffinic hydrocarbon feed, and calculate as the received value the cumulative amount thereof the HI catalyst has encountered at a given time point from the beginning of the run, and to compare the received value to a value that has been predetermined for example based on historical data or a model based on historical data to reflect too high HI catalyst deactivation so that meeting the target yield and/or quality of the desired fuel component(s) can no longer be foreseen.

In certain preferred embodiments, the process comprises monitoring at least two, or at least three of the above-mentioned parameters indicative of deactivation of the HI catalyst. For example, good cold properties (e.g. cloud point, pour point, subzero viscosity) of the HI effluent may be achieved due to increased amount of shorter carbon chains caused by increased cracking taking place in the first reactor, instead of sufficient degree of isomerization. Thus, it may be beneficial to monitor at least two or three or even more parameters in order to obtain better understanding of the status of the HI catalyst deactivation. For example, one or more operating conditions in the first reactor, and one or more physico-chemical characteristics and/or yields of the recovered liquid transportation fuel component(s) are conveniently monitored, and give enhanced understanding on the deactivation status of the HI catalyst. In certain exemplary embodiments, the monitored parameters indicative of deactivation of the HI catalyst comprise temperature, and optionally also WHSV in the first reactor, and for a recovered diesel fuel component yield, at least one or more distillation characteristics, and/or cloud point, and/or for a recovered aviation fuel component yield, at least one or more distillation characteristics, and/or freezing point.

Monitoring parameters indicative of HI catalyst deactivation may be performed continuously, repeatedly, continually, periodically, intermittently, discontinuously, or be one-time monitoring. The monitoring of parameters indicative of HI catalyst deactivation may be performed on-line, for example using a sensor or sensors in any of the process streams, feed tanks, and/or product tanks, including slip-stream arrangements, or off-line, based on samples taken from any of the process streams, feed tanks, and/or product tanks. The frequency and way of monitoring one or more parameters may be performed independently from other monitored parameters, i.e. certain parameters may for example be monitored continuously on-line, while others may for example be monitored periodically off-line.

It is well known to a skilled person how to select HI and hydrocracking conditions, preferably within the HI and hydrocracking condition ranges specified in the following, taking into account the selected HI catalyst, composition of the paraffinic hydrocarbon feed, and targeted degree of isomerisation, as well as targeted content of multiple-branched isoparaffins in the HI effluent; and taking into account the selected hydrocracking (HC) catalyst, composition of the second reactor feed, and targeted degree of effective cracking, as well as targeted content of isoparaffins in the effluent of the second reactor, targeted degree of isomerisation, as well as targeted content of multiple-branched isoparaffins in the effluent of the second reactor. To a certain extent, catalyst age or catalyst deactivation may also be taken into account when selecting or adjusting operating conditions of the first and/or the second reactor. During continued operation, the HI catalyst and the HC catalyst deactivate gradually, for example due to impurities in process streams and coking. As the catalyst(s) deactivate, catalyst activity is reduced and selectivity affected, and at some point, desired properties of the HI effluent, the recycle effluent, the hydrocracking effluent, the recovered liquid transportation fuel component(s), and/or the separated recycle stream are no longer reached. When that happens, at least one or more operating conditions of the first reactor and/or second reactor, including for example temperature, pressure, WHSV, and/or H₂ partial pressure at the inlet of the first reactor and/or the second reactor, may be adjusted, preferably within the operating condition ranges specified in the following, to compensate for catalyst deactivation so that desired properties of the HI effluent, the recycle effluent, the hydrocracking effluent, the recovered liquid transportation fuel component(s), and/or the separated recycle stream may be reached again. Typically, this means increasing the temperature and/or decreasing the WHSV and/or adjusting the H₂ to paraffinic hydrocarbon feed ratio and/or increasing the pressure. However, there are limits beyond which e.g. the temperature cannot be increased and/or WHSV decreased without compromising yield and/or quality of the recovered liquid transportation fuel component(s). For example, when operating temperature is increased to a high enough value, thermal cracking side reactions are increased, increasing the formation of gaseous hydrocarbons, and hence decreasing yield of liquid products. Accordingly, it is usually beneficial to start operating the HI reactor (first reactor) in the beginning of the run at a low temperature, using for example lowest feasible temperature in the specified range, as that provides the widest window for increasing the temperature upon gradual catalyst deactivation. Also, the HC catalyst deactivates gradually during continued operation, although typically at lower pace compared to the HI catalyst, so similar considerations apply to adjusting operating conditions of the second reactor.

In certain preferred embodiments, the present process comprises separating from the fractionation the recycle stream and feeding the recycle stream to the first reactor as a co-feed with the paraffinic hydrocarbon feed, and/or separating from the fractionation a side cut and feeding the side cut to the first reactor as a co-feed with the paraffinic hydrocarbon feed, and/or feeding a portion of the paraffinic hydrocarbon feed to the second reactor, which portion is obtained by splitting the paraffinic hydrocarbon feed between the first reactor and the second reactor. In addition to the possibility to adjust the operating conditions in the first reactor and/or in the second reactor, these embodiments provide further enhanced flexibility for operating the process, including possibility to adjust the process e.g. according to the fluctuations in the characteristics of the paraffinic hydrocarbon feed, according to the demand and/or quality of the recovered one or more liquid transportation fuel components, and/or according to the changing activity and/or selectivity of the HI and/or HC catalysts throughout their lifetime.

The desired properties of the HI effluent, the recycle effluent, the hydrocracking effluent, the recovered liquid transportation fuel component(s), and/or the separated recycle stream include compositional and/or physico-chemical characteristics, for example at least one or more of wt-% isoparaffins, wt-% multiple-branched isoparaffins, wt-% of hydrocarbons within a certain carbon number range, cloud point, freezing point, pour point, cold filter plugging point, kinematic viscosity, density, and/or a distillation characteristic. The properties of the HI effluent, the recycle effluent, the hydrocracking effluent, the recovered liquid transportation fuel component(s), and/or the separated recycle stream may change in the course of operating the process due to deactivation of the HI and/or the HC catalyst, but also due to other reasons such as change in the paraffinic hydrocarbon feed composition. Thus, one or more parameters indicative of deactivation of the HI and/or the HC catalyst, and/or indicative of properties of the paraffinic hydrocarbon feed, may be monitored to receive one or more values and the received values may be compared to predetermined adjustment values. Predetermined adjustment values are typically closer to the initial process settings than the predetermined values used for triggering the switching from the first mode to the second mode.

Hence, according to an embodiment, the process further comprises monitoring at least one or more parameters indicative of deactivation of the HI catalyst to receive at least one or more values; and/or monitoring at least one or more parameters indicative of deactivation of the HC catalyst to receive at least one or more values; and/or monitoring at least one or more parameters indicative of the properties of the paraffinic hydrocarbon feed to receive at least one or more values; comparing the received values to predetermined adjustment values, and based on said comparison, adjusting at least one or more operating conditions in the first reactor, and/or in the second reactor, and/or adjusting composition of the paraffinic hydrocarbon feed, and/or of the second reactor feed, preferably adjusting at least one or more of temperature, pressure, and/or weight hourly space velocity (WHSV) in the first reactor and/or second reactor, H₂ to paraffinic hydrocarbon feed ratio, and/or H₂ to second reactor feed ratio, and/or H₂ partial pressure at the inlet of the first reactor and/or second reactor, the weight-ratio in the second reactor feed of the separated recycle stream or an optional further recycle stream optionally fed to the second reactor, the split-ratio of the HI effluent between the second reactor and the fractionation, and/or the weight-ratio in the feed to the first reactor of separated side cut recycled back to the process (fed to the first reactor), more preferably increasing the temperature, and/or the pressure in the first reactor, and/or second reactor, and/or decreasing the WHSV in the first reactor and/or second reactor, and/or adjusting the weight-ratio of the separated recycle feed and/ or optional further recycle feed fed to the second reactor, and/or adjusting the split-ratio of the HI effluent between the second reactor and the fractionation.

The adjustment of operating conditions to obtain or maintain desired properties of the HI effluent, the recycle effluent, the hydrocracking effluent, the recovered liquid transportation fuel component(s), and/or the separated recycle stream may be done for example based on historical process data, a model, e.g. a theoretical model or a model based on historical process data, and/or one or more parameters relating to, or indicative of, properties of one or more of the HI effluent, the recycle effluent, the hydrocracking effluent, the recovered liquid transportation fuel component(s), and/or the separated recycle stream. For example, the adjusting may be based on historical process data from earlier processes run using similar feed and similar qualitative and quantitative expectations for the recovered liquid transportation fuel components, for example using a model and/or operating condition profile based on historical process data.

In the present process, the paraffinic hydrocarbon feed subjected to hydroisomerisation in the first reactor comprises at least 60 wt-% paraffins of the total weight of the paraffinic hydrocarbon feed, of which paraffins at most 30 wt-% are isoparaffins. This means that when the paraffinic hydrocarbon feed comprises 60 wt-% paraffins of the total weight of the paraffinic hydrocarbon feed, then at most 30 wt-% of the total weight of paraffins in the paraffinic feed i.e. at most 18 wt-% of the total weight of the paraffinic hydrocarbon feed, are isoparaffins. Preferably, the paraffinic hydrocarbon feed comprises at least 70 wt-%, more preferably at least 80 wt-%, even more preferably at least 90 wt-% paraffins of the total weight of the paraffinic hydrocarbon feed. The paraffinic hydrocarbon feed of the present disclosure may comprise even at least 95 wt-% paraffins of the total weight of the paraffinic hydrocarbon feed or consist essentially of paraffins. The paraffinic hydrocarbon feed of the present disclosure may contain minor amounts of olefins, preferably less than 5 wt-%, more preferably less than 1 wt-%, based on the total weight of the paraffinic hydrocarbon feed, as well as minor amounts of aromatics and/or naphthenes.

An advantage of using a highly paraffinic hydrocarbon feed in the present process is that paraffins are isomerised relatively easily and at milder conditions when subjected to HI compared to e.g. cyclic hydrocarbons. Also, paraffins crack relatively easily and at milder conditions when subjected to hydrocracking.

Of the paraffins in the paraffinic hydrocarbon feed of the present disclosure, preferably at most 25 wt-%, more preferably at most 20 wt-%, and even more preferably at most 15 wt-% are isoparaffins. For example, of the paraffins in the paraffinic hydrocarbon feed from 1 wt-% to 30 wt-%, or from 1 wt-% to 20 wt-%, or from 2 wt-% to 30 wt-%, or from 2 wt-% to 20 wt-% may be isoparaffins.

A high weight-ratio (wt-%:wt-%) of n-paraffins to isoparaffins in the paraffinic hydrocarbon feed may contribute to limiting cracking side-reactions during HI in the first reactor as n-paraffins are less prone to crack compared to isoparaffins of same carbon number. However, the presence of a certain amount of isoparaffins in the paraffinic hydrocarbon feed may still be beneficial. Compared to otherwise similar feeds, but without isoparaffin content, paraffinic hydrocarbon feeds containing a certain amount of isoparaffins may yield a HI effluent with a higher content of multiple-branched isoparaffins.

Preferably, the paraffinic hydrocarbon feed of the present disclosure comprises at least 70 wt-%, preferably at least 80 wt-%, more preferably at least 90 wt-%, even more preferably at least 95 wt-% hydrocarbons having a carbon number within the range from C12 to C30, of the total weight of the paraffinic hydrocarbon feed. In certain particularly preferred embodiments, the paraffinic hydrocarbon feed comprises at least 70 wt-%, preferably at least 80 wt-%, more preferably at least 90 wt-%, even more preferably at least 95 wt-% hydrocarbons having a carbon number within the range from C14 to C22, of the total weight of the paraffinic hydrocarbon feed. Paraffinic hydrocarbon feeds having a high content of C12 to C30 hydrocarbons are preferred as they allow good yields of two or more liquid transportation fuel components of different kinds. C14 to C22 hydrocarbons are particularly preferred for the same reason, and also because they are readily available for example from conventional HDO of vegetable oils, animal fats and/or microbial oils, comprising fatty acids.

To increase the yield of aviation fuel component and/or diesel fuel component, it is particularly preferred that the paraffinic hydrocarbon feed comprises at least 50 wt-%, preferably at least 60 wt-%, more preferably at least 70 wt-%, even more preferably at least 80 wt-% or at least 90 wt-% C16+ paraffins of the total weight of paraffins in the paraffinic hydrocarbon feed. In certain embodiments, the paraffinic hydrocarbon feed comprises at least 50 wt-% C17+ paraffins of the total weight of paraffins in the paraffinic hydrocarbon feed. This kind of compositions are attainable by suitably selecting heavier paraffinic hydrocarbon feeds, particularly by suitably selecting feedstocks, such as oxygenated hydrocarbons, for producing them. Examples of suitable heavier oxygenated hydrocarbon feeds include oil from energy crops such as Brassica species, algal oils, crude tall oil (CTO), tall oil fatty acids (TOFA), tall oil pitch (TOP), and/or lignocellulosics-originating feeds. C17+ paraffins are also obtainable by Fischer-Tropsch conversion of syngas.

The paraffinic hydrocarbon feed may comprise any suitable paraffinic hydrocarbon composition or combinations thereof. Preferably, in the present process the step of providing the paraffinic hydrocarbon feed comprises subjecting a hydrotreatment feed to a catalytic hydrotreatment, preferably subjecting an oxygenated hydrocarbon feed to catalytic hydrodeoxygenation, to obtain a paraffinic hydrotreatment effluent, wherein the hydrotreatment feed preferably comprises at least one or more of vegetable oils, animal fats, microbial oils, thermally liquefied organic waste and residues, and/or enzymatically liquefied organic waste and residues, more preferably the oxygenated hydrocarbon feed comprises at least one or more of vegetable oils, animal fats and/or microbial oils, and/or subjecting a syngas to a Fischer-Tropsch conversion to obtain a paraffinic FT effluent; subjecting the paraffinic hydrotreatment effluent and/or the paraffinic FT effluent to a gas-liquid separation, and optionally to a paraffinic feed fractionation to provide the paraffinic hydrocarbon feed. By gas-liquid separation is meant removing at least compounds that are gaseous at NTP.

While e.g. paraffinic FT effluents of fossil origin are readily available (in addition to FT effluents of renewable origin), preferably the paraffinic hydrocarbon feed of the present disclosure is at least partially renewable, i.e. comprises biogenic components. In certain preferred embodiments, the biogenic carbon content of the paraffinic hydrocarbon feed is at least 50 wt-%, preferably at least 70 wt-%, more preferably at least 90 wt-%, further preferably at least 95 wt-%, or even about 100 wt-%, based on the total weight of carbon (TC) of the paraffinic hydrocarbon feed, preferably as determined according to EN 16640 (2017).

In certain embodiments, the paraffinic hydrocarbon feed comprises or consists essentially of a degassed paraffinic Fischer-Tropsch effluent, or a fraction thereof. Fischer-Tropsch process involves a catalytic conversion of syngas comprising carbon monoxide and hydrogen, typically to a substantially Gaussian distribution of hydrocarbon chains, mainly n-paraffins, having a wide carbon chain length distribution, such as from C2 to C100+, typically from about C5 to about C50. FT effluents are typically highly paraffinic comprising mainly n-paraffins. The catalytic FT conversion of syngas may result in a minor degree of isomerisation, the FT effluent typically comprising about 10 wt-% or less isoparaffins of the total weight of the FT effluent.

The syngas used in the FT process may be produced from renewable materials, natural gas, coal, or a combination thereof.

Preferably, the paraffinic hydrocarbon feed of the present disclosure comprises or consists essentially of a degassed paraffinic hydrotreatment effluent, or a fraction thereof, particularly as obtained by catalytic hydrotreatment of a hydrotreatment feed comprising at least one or more of vegetable oils, animal fats, microbial oils, thermally liquefied organic waste and residues, and/or enzymatically liquefied organic waste and residues, more preferably at least one or more of vegetable oils, animal fats, and/or microbial oils, to obtain a paraffinic hydrotreatment effluent, followed by subjecting the paraffinic hydrotreatment effluent to a gas-liquid separation, and optionally to a paraffinic feed fractionation to provide the degassed hydrotreatment effluent, or a fraction thereof.

By the term "catalytic hydrotreatment", sometimes also referred to as hydroprocessing, is meant a catalytic process of treating organic material by means of molecular hydrogen. Preferably, catalytic hydrotreatment removes oxygen from organic oxygen compounds as water, i.e. hydrodeoxygenation (HDO), sulphur from organic sulphur compounds as dihydrogen sulphide (H₂S), i.e. hydrodesulphurisation (HDS), nitrogen from organic nitrogen compounds as ammonia (NH₃), i.e. hydrodenitrogenation (HDN), halogens, for example chlorine from organic chloride compounds as hydrochloric acid (HCl), i.e. hydrodechlorination (HDCl), and/or metals by hydrodemetallization, and/or hydrogenates olefinic bonds if present in the hydrotreatment feed. Depending on the composition of the hydrotreatment feed, different reactions may occur and/or prevail.

Preferably, the paraffinic hydrocarbon feed of the present disclosure comprises or consists essentially of a degassed HDO effluent, or a fraction thereof, particularly as obtained by catalytic hydrodeoxygenation (HDO) of an oxygenated hydrocarbon feed comprising at least one or more of vegetable oils, animal fats, and/or microbial oils, to obtain a paraffinic HDO effluent, followed by subjecting the paraffinic HDO effluent to a gas-liquid separation, and optionally to a paraffinic feed fractionation to provide the degassed HDO effluent, or a fraction thereof.

In certain embodiments, providing the paraffinic hydrocarbon feed comprises subjecting an oxygenated hydrocarbon feed, preferably in a hydrodeoxygenation (HDO) reactor, to hydrodeoxygenation in the presence of a hydrodeoxygenation catalyst to obtain a hydrodeoxygenation effluent, and subjecting the hydrodeoxygenation effluent to gas-liquid separation and optionally to paraffinic feed fractionation to obtain as the paraffinic hydrocarbon feed the degassed hydrodeoxygenation effluent or a fraction thereof, wherein the hydrodeoxygenation is preferably conducted at a temperature within a range from 200 °C to 500 °C, a pressure within a range from 1 MPa to 20 MPa, a H₂ partial pressure at the inlet of the reactor within a range from 1 MPa to 20 MPa, a weight hourly space velocity within a range from 0.1 to 10 kg oxygenated hydrocarbon feed per kg catalyst per hour, and a H₂ to oxygenated hydrocarbon feed ratio within a range from 50 to 2000 normal liters H₂ per liter oxygenated hydrocarbon feed. Preferably, the oxygenated hydrocarbon feed comprises at least one or more of vegetable oils, animal fats, and/or microbial oils. Hydrodeoxygenation is preferably conducted as described in prior art publications, such as FI100248B, EP1741768A1, EP2155838B1, or FI129220 B1.

The optional paraffinic feed fractionation is typically conducted in a fractionation unit different from the fractionation unit(s) used to recover the liquid transportation fuel component(s) and/or to separate the recycle stream. The optional paraffinic feed fractionation may be regarded separate from the fractionation of the present process, which fractionation of the present process comprises fractionation to recover the liquid transportation fuel component(s) and/or to separate the recycle stream.

Preferably, the HDO catalyst is a sulphided catalyst comprising at least one or more metals from Group VIII of the Periodic Table, and/or from Group VIB of the Periodic Table, preferably at least one or more of Ni, Mo, W, and/or Co, even more preferably at least one or more of Ni, and/or Co and Mo, and/or W, such as NiMo, CoMo, NiCoMo, NiW, NiMoW. These catalysts are efficient, readily available, and tolerate typical impurities of fatty feedstocks well. If using a catalyst having hydrodewaxing properties, such as a catalyst containing NiW, in the hydrodeoxygenation as the hydrodeoxygenation catalyst or as a co-catalyst, HDO effluent with somewhat elevated isoparaffin content may be attained.

In certain embodiments, the paraffinic hydrocarbon feed may comprise a side cut separated in the fractionation of the present process. Said side cut is preferably included in the paraffinic hydrocarbon feed as a minor constituent. The side cut is preferably a fraction rich in C14-18 hydrocarbons, more preferably rich in C15-C17 hydrocarbons. The side cut is preferably a relatively narrow fraction to allow precise modification of the boiling point distribution of the total feed to fractionation. Incorporating such side cut in the paraffinic hydrocarbon feed may improve quality of the recovered liquid transportation fuel components or of at least some of the recovered liquid transportation fuel components, particularly of aviation fuel component. As the side cut is separated after HI and hydrocracking, it typically has a high isoparaffin content. Hence, inclusion of the side cut in the paraffinic hydrocarbon feed may increase the isoparaffin content of the paraffinic hydrocarbon feed to some extent, preferably to at most 30 wt-% of the total weight of paraffins in the paraffinic hydrocarbon feed. HI in the first reactor, hydrocracking in the second reactor, as well as optionally performed HDO and/or hydrodearomatisation (HDA) steps, may have an impurity-removing effect on treated stream especially when followed by a gas-liquid separation. Incorporating even a small amount of a side cut containing at most very low amount of impurities to the paraffinic hydrocarbon feed may reduce or dilute the impurity content of the paraffinic hydrocarbon feed that may slow down the HI catalyst deactivation.

In the present process the paraffinic hydrocarbon feed is subjected in a first reactor to hydroisomerisation (HI) in the presence of a HI catalyst to obtain a HI effluent. Generally, in the context of the present disclosure, HI of the paraffinic hydrocarbon feed in the first reactor is operated so that isomerisation reactions prevail while cracking reactions are controlled or suppressed.

Preferably, the hydroisomerisation in the first reactor is conducted at a temperature within a range from 200 °C to 500 °C, preferably from 230 °C to 500 °C, more preferably from 250 °C to 450 °C, even more preferably from 280 °C to 400 °C, a pressure within a range from 1 MPa to 10 MPa, preferably from 2 MPa to 8 MPa or from 3 MPa to 10 MPa, a H₂ partial pressure at the inlet of the first reactor within a range from 1 MPa to 10 MPa, preferably from 2 MPa to 8 MPa, a weight hourly space velocity within a range from 0.1 to 10, preferably from 0.2 to 8, more preferably from 0.4 to 6 kg paraffinic hydrocarbon feed per kg catalyst per hour, and a H₂ to paraffinic hydrocarbon feed ratio within a range from 10 to 2000, preferably from 50 to 1000 normal liters H₂ per liter paraffinic hydrocarbon feed.

According to certain embodiments, the hydroisomerisation in the first reactor is conducted at a temperature within a range from 200 °C to 500 °C, a pressure within a range from 1 MPa to 10 MPa, a H₂ partial pressure at the inlet of the first reactor within a range from 1 MPa to 10 MPa, a weight hourly space velocity within a range from 0.1 to 10 kg paraffinic hydrocarbon feed per kg catalyst per hour, and a H₂ to paraffinic hydrocarbon feed ratio within a range from 10 to 2000 normal liters H₂ per liter paraffinic hydrocarbon feed.

According to certain particularly preferred embodiments, the hydroisomerisation in the first reactor is conducted at a temperature within a range from 230 °C to 500 °C, a pressure within a range from 2 to 8 MPa, a H₂ partial pressure at the inlet of the first reactor within a range from 2 to 8 MPa, a weight hourly space velocity within a range from 0.2 to 8 kg paraffinic hydrocarbon feed per kg catalyst per hour, and a H₂ to paraffinic hydrocarbon feed ratio within a range from 50 to 1000 normal liters H₂ per liter paraffinic hydrocarbon feed.

Degree of isomerisation of the HI effluent may be improved by increasing severity of the HI e.g. by at least one or more of: decreasing WHSV, increasing temperature, and/or increasing pressure. When using fresh HI catalyst, high severity HI conditions may be reached at lower temperature, and/or lower pressure, and/or using higher WHSV. Towards the end of the HI catalyst lifetime higher temperature, and/or higher pressure, and/or lower WHSV may be needed to reach even medium severity HI. In the present context, HI that yields liquid effluents having, as wt-% of paraffins in the liquid effluent, total i-paraffins content within a range from 50 wt-% to 85 wt-% and multiple-branched i-paraffins content at most 25 wt-%, or total i-paraffins content within a range from 85 wt-% to 95 wt-% and multiple-branched i-paraffins content within a range from 25 wt-% to 55 wt-%, or total i-paraffins content at least 95 wt-% and multiple-branched i-paraffins content more than 55 wt-%, is generally regarded as HI of low severity or medium severity or high severity, respectively, although these content ranges are merely for illustrating the order of magnitude, and may overlap to some extent, and vary from case to case.

Preferably, the hydroisomerisation in the first reactor is operated so that the ratio of the wt-% amount of isoparaffins of the total weight of paraffins in the HI effluent to the wt-% amount of isoparaffins of the total weight of paraffins in the paraffinic hydrocarbon feed is at least 2, or at least 4, or at least 6, or at least 8, or at least 10, or at least 12, and/or so that the ratio of the wt-% amount of multiple-branched isoparaffins of the total weight of paraffins in the HI effluent to the wt-% amount of multiple-branched isoparaffins of the total weight of paraffins in the paraffinic hydrocarbon feed is at least 2, or at least 4, or at least 6, or at least 8, or at least 10, or at least 12, and/or so that the (total) HI effluent comprises C1 to C4 hydrocarbons less than 20 wt-%, or less than 10 wt-%, preferably less than 5 wt-%, more preferably less than 3 wt-% of the total weight of the HI effluent. These may be achieved especially when operating the first reactor within the HI operating conditions, and/or using the HI catalyst(s) and/or the paraffinic hydrocarbon feed as defined herein.

The HI effluent is preferably subjected to gas-liquid separation, i.e. removal of at least compounds that are gaseous at NTP. This can be done before directing to step i) or I), e.g. as an integral step within the first reactor, or when running the process in the first mode, as part of the fractionation in step i).

When operating the present process in the second mode, subjecting the HI effluent to gas-liquid separation is not necessary and in certain embodiments essentially the whole HI effluent may be fed to the second reactor. Omitting gas-liquid separation of the HI effluent may decrease investment and operating costs, and also energy efficiency may be improved.

Preferably however, the HI effluent is subjected to gas-liquid separation before directing to step i) or I), or when running the process in the first mode, as part of the fractionation in step i). More preferably, the HI effluent is subjected to gas-liquid separation at least before directing to step I). Degassing removes for example gaseous impurities from the HI effluent and increases hydrogen partial pressure in the second reactor feed. Additionally, the operating conditions in the second reactor are easier to optimize when the reactor feed is less heterogeneous.

Typically, the HI effluent comprises at least 60 wt-%, preferably at least 70 wt-%, more preferably at least 80 wt-%, even more preferably at least 90 wt-% or at least 95 wt-% paraffins of the total weight of the HI effluent. In certain embodiments, the HI effluent may even consist essentially of paraffins.

Typically, the HI effluent may comprise at least 50 wt-%, preferably at least 60 wt-%, more preferably at least 70 wt-%, even more preferably at least 80 wt-% isoparaffins of the total weight of paraffins in the HI effluent, and optionally multiple-branched isoparaffins at least 5 wt-%, more preferably at least 10 wt-%, even more preferably at least 15 wt-%, or at least 20 wt-% of the total weight of paraffins in the HI effluent. Typically, the HI effluent may comprise at most 75 wt-%, or at most 70 wt-%, or at most 60 wt-%, such as at most 50 wt-%, or at most 40 wt-%, sometimes at most 30 wt-%, or even at most 20 wt-% multiple-branched isoparaffins of the total weight of paraffins in the HI effluent. Typically, the HI effluent may have a cloud point less than 0 °C, preferably less than -5 °C, more preferably less than -8 °C, even more preferably less than -10 °C, or less than -15 °C (ASTM D 5771-17).

Presence of multiple-branched isoparaffins in the HI effluent may be considered beneficial as it may contribute beneficially to the degree of effective cracking in the second reactor. When a desired degree of effective cracking, particularly to C8 to C14 hydrocarbons but also to lighter non-gaseous hydrocarbons, is achieved in the second reactor at milder operating conditions excessive cracking may be avoided, and formation of gaseous hydrocarbons reduced. Also, an increased content of multiple-branched isoparaffins in the HI effluent may be considered beneficial in that it may improve the cold properties of the recovered liquid transportation fuel component(s), especially the cold properties of aviation fuel component and/or diesel fuel component, and/or RON of gasoline fuel component. Without being bound to any theory, it is believed that a multiple-branched isoparaffin is more likely to form upon cracking in the second reactor two branched paraffin molecules instead of one branched and one n-paraffin, hence increasing the isoparaffin content of the recycle effluent or hydrocracking effluent.

When run in the first mode, the present process comprises subjecting the HI effluent to fractionation to separate from the HI effluent at least a recycle stream having a T5 temperature (5 vol-% recovered, EN ISO 3405-2019) of 270 °C or higher. The total feed subjected to the fractionation in the first mode is initially the HI effluent, optionally after being subjected to gas-liquid separation integrally within the first reactor, and as the process is kept running the total feed subjected to the fractionation comprises the HI effluent and the recycle effluent, said effluents being preferably combined.

Preferably, the recycle stream has a T5 temperature of 275 °C or higher. In certain preferred embodiments, the recycle stream has a T5 temperature within a range from 270 °C to less than 300°C, preferably within a range from 270 °C to less than 295 °C, more preferably within a range from 270 °C to less than 290 °C; and/or an initial boiling point (IBP, EN ISO 3405-2019) less than 290 °C, preferably less than 288 °C, more preferably less than 285°C, or less than 280°C. The recycle stream may have the FBP of the total feed subjected to fractionation, i.e. the recycle stream may comprise the heavy bottom of the total feed subjected to fractionation.

The T5 temperature of the recycle stream is preferably selected so that at least a portion of the C16 n-paraffins present in the total feed subjected to the fractionation, such as C16 n-paraffins present in the HI effluent, if any, are recovered in the recycle stream. Recovering C16 n-paraffins in the recycle stream may be attained by suitably selecting the T5 temperature and/or IBP of the recycle stream. C16 n-paraffins have a boiling point of 287 °C (at normal pressure), but as fractionations, such as distillation separations, are not perfectly sharp, C16 n-paraffins may be recovered over a temperature range around that boiling point. Preferably, the recycle stream comprises C16 n-paraffins.

Recycling at least some of C16 n-paraffins to the second reactor to be subjected to hydrocracking is beneficial as C16 n-paraffins have a relatively high melting point. Hence, the presence of C16 n-paraffins in any significant amounts for example in the recovered aviation fuel component might even render the aviation fuel component unusable in aviation fuel compositions, due to poor cold properties, especially poor freezing point, and/or poor, i.e. high, kinematic viscosity at subzero temperatures such as -20 °C or -40 °C. In any event, C16 n-paraffins in the recovered aviation fuel component impairs its cold properties i.e. increases one or more of cloud point, freezing point, pour point, cold filter plugging point, and/or subzero kinematic viscosity, compared to aviation fuel components with less or without C16 n-paraffin content. Preferably, the recycle stream comprises at least 20 wt-% or at least 30 wt-%, more preferably at least 40 wt-% or at least 50 wt-% of the C16 n-paraffins in the total feed subjected to fractionation. The amount of n-paraffins, including C16 n-paraffins, in the total feed subjected to the fractionation may increase upon HI catalyst deactivation, and may also be formed by cracking in the second reactor.

In certain particularly preferred embodiments, the recycle stream comprises at least 85 wt-%, preferably at least 90 wt-%, more preferably at least 95 wt-% C16+ paraffins of the total weight of paraffins in the recycle stream. Subjecting C16+ paraffins to hydrocracking in the second reactor is beneficial in that it may increase yield and/or improve quality of aviation fuel component. C16+ n-paraffins have poor cold properties while C18+ n-paraffins generally boil outside the aviation fuel boiling range.

Typically, the recycle stream comprises at least 60 wt-%, preferably at least 70 wt-%, more preferably at least 80 wt-%, even more preferably at least 90 wt-% or at least 95 wt-% paraffins of the total weight of the recycle stream, or the recycle stream may even consist essentially of paraffins. In certain particularly preferred embodiments, the recycle stream comprises at least 50 wt-%, preferably at least 60 wt-%, more preferably at least 70 wt-%, or at least 80 wt-% and/or up to 100 wt-%, or at most 98 wt-% isoparaffins of the total weight of paraffins in the recycle stream, and/or at least 5 wt-%, or at least 10 wt-%, preferably at least 15 wt-%, or at least 20 wt-% multiple-branched isoparaffins of the total weight of paraffins in the recycle stream. Typically, the recycle stream comprises at most 95 wt-% or at most 90 wt-%, or at most 80 wt-%, or at most 70 wt-%, such as at most 60 wt-%, or at most 50 wt-%, or at most 40 wt-%, sometimes at most 30 wt-%, or even at most 20 wt-% multiple-branched isoparaffins of the total weight of paraffins in the recycle stream, typically ranging from 5 wt-% to 95 wt-%, preferably from 5 wt-% to 80 wt-%, or from 5 wt-% to 70 wt-%, such as from 10 wt-% to 70 wt-%, or from 15 wt-% to 65 wt-% multiple-branched isoparaffins of the total weight of paraffins in the recycle stream. Typically, the recycle stream has a cloud point less than 0°C, preferably less than -5°C, more preferably less than -10°C, even more preferably less than -20°C, further preferably less than -30°C (ASTM D 5771-17).

This kind of recycle streams have a beneficial composition in view of degree of efficient cracking in the hydrocracking, forming hydrocarbons boiling in the aviation fuel range, and also in gasoline boiling range, as generally paraffins are more prone to crack than cyclic hydrocarbons, longer paraffins are more prone to crack than shorter paraffins, and isoparaffins are foreseen more prone to crack than n-paraffins, and relative homogeneity of the recycle stream composition can make optimising the hydrocracking conditions in the second reactor easier. Additionally, these embodiments facilitate easy separation by mere splitting of e.g. diesel fuel component, marine fuel component, base oil component, and/or transformer oil component from the recycle stream, just to name a few examples of components that may be separated from such recycle streams.

The present process may also comprise in step II) recovering from the fractionation a further recycle stream having a T5 temperature (5 vol-% recovered, EN ISO 3405-2019) of 270 °C or higher, and feeding the recovered further recycle stream to the second reactor as a co-feed with the HI effluent, i.e. as part of the second reactor feed. In this case, the second reactor feed comprises, as combined, the HI effluent and the recovered further recycle stream. The further recycle stream is preferably a recycle stream as defined above. Preferably, the further recycle stream comprises C16 n-paraffins.

In certain preferred embodiments, the second reactor feed consists essentially of the recycle stream and/or at least a portion of the hydroisomerisation effluent and/or the optional further recycle stream. For example, the second reactor feed may in step i) consist essentially of the recycle stream, or of the recycle stream and a portion of the HI effluent, and/or the second reactor feed may in step II) consist essentially of the HI effluent and optionally the further recycle stream or at least a portion of the HI effluent and optionally the further recycle stream.

In embodiments, where the second reactor feed comprises in step i) a portion of the HI effluent, the amount of such portion may vary but is generally just a minor portion (outside of the switching). For example, the second reactor feed may in step i) optionally comprise, based on the total weight of the second reactor feed, less than 50 wt-%, preferably less than 30 wt-%, more preferably less than 10 wt-% of the HI effluent, preferably as degassed.

The present process comprises in step ii) subjecting a second reactor feed comprising the recycle stream to hydrocracking in a second reactor in the presence of a HC catalyst to obtain a recycle effluent, and in step II) subjecting a second reactor feed comprising the HI effluent to hydrocracking in the second reactor in the presence of the HC catalyst to obtain a hydrocracking effluent.

Generally hydrocracking in the second reactor is operated so that cracking reactions, especially those enhancing the degree of effective cracking, are more abundant than in the hydroisomerisation in the first reactor. Preferably, cracking reactions, especially those enhancing the degree of effective cracking, prevail in the hydrocracking in the second reactor, yet generally without excessive cracking and excessive fuel gas formation.

In certain preferred embodiments, the hydrocracking in the second reactor is conducted at a temperature within a range from 200 °C to 450 °C, preferably from 220 °C to 430 °C, more preferably from 280 °C to 350 °C, a pressure within a range from 0.4 MPa to 8 MPa, preferably from 1 MPa to 7 MPa, more preferably from 2.5 MPa to 7 MPa, a H₂ partial pressure at the inlet of the second reactor within a range from 0.4 MPa to 8 MPa, preferably from 1 MPa to 7 MPa, more preferably from 2.5 MPa to 7 MPa, a weight hourly space velocity within a range from 0.1 to 10, preferably from 0.2 to 8, more preferably from 0.4 to 6, even more preferably from 0.5 to 1.5 kg second reactor feed per kg catalyst per hour, and a H₂ to second reactor feed ratio within a range from 10 to 2000, preferably from 50 to 1000 normal liters H₂ per liter second reactor feed. Typically, in the present process the hydrocracking in the second reactor is conducted at a temperature within a range from 200 °C to 450 °C, a pressure within a range from 0.4 MPa to 8 MPa, a H₂ partial pressure at the inlet of the second reactor within a range from 0.4 MPa to 8 MPa, preferably from 1 MPa to 7 MPa, a weight hourly space velocity within a range from 0.1 to 10 kg second reactor feed per kg catalyst per hour, and a H₂ to second reactor feed ratio within a range from 10 to 2000, preferably from 50 to 1000 normal liters H₂ per liter second reactor feed.

According to certain embodiments, the hydrocracking in the second reactor is conducted at a temperature within a range from 220 °C to 430 °C, a pressure within a range from 1 MPa to 7 MPa, a weight hourly space velocity within a range from 0.2 to 8 kg second reactor feed per kg catalyst per hour, and a H₂ to second reactor feed ratio within a range from 50 to 1000 normal liters H₂ per liter second reactor feed. In certain preferred embodiments, the hydrocracking in the second reactor is conducted at a temperature within a range from 280 to 350 °C, a pressure within a range from 2.5 to 7 MPa, a H₂ partial pressure at the inlet of the second reactor within a range from 2.5 to 7 MPa, a weight hourly space velocity within a range from 0.4 to 6 kg second reactor feed per kg catalyst per hour, and a H₂ to second reactor feed ratio within a range from 50 to 1000 normal liters H₂ per liter second reactor feed. When operating the HC at lower temperatures and sufficiently high pressures, aromatizing side reactions may be better suppressed or even dearomatisation enhanced.

Preferably, hydrocracking in the second reactor is operated so that the ratio of the wt-% amount of isoparaffins of the total weight of paraffins in the hydrocracking effluent (step I)) and/or in the recycle effluent (step ii)) to the wt-% amount of isoparaffins of the total weight of paraffins in the second reactor feed is at least 0.5, or at least 0.7, or at least 0.8, or at least 0.9, or at least 1.0; and/or so that the ratio of the C8-C14 hydrocarbon content in the hydrocracking effluent (step I)) or recycle effluent (step ii)) to the C8-C14 hydrocarbon content in the second reactor feed is at least 1.1, preferably at least 1.3, more preferably at least 1.5, even more preferably at least 1.8 or at least 2.0.

In certain preferred embodiments, hydrocracking in the second reactor is operated so that the ratio of wt-% amount of C1-C4 hydrocarbons formed during hydrocracking in the (total) recycle effluent (step ii)) or in the total hydrocracking effluent (step I)) to the wt-% amount of C1-C4 hydrocarbons in the (total) HI effluent is within a range from 1.1 to 5.0, preferably from 1.1 to 4.0, more preferably from 1.2 to 3.0; and/or so that the (total) recycle effluent (step ii)) or the (total) hydrocracking effluent (step I)) comprises C1-C4 hydrocarbons less than 20 wt-%, or less than 10 wt-%, or less than 5 wt-% of the total weight of the recycle effluent or of the hydrocracking effluent, respectively.

These may be achieved especially when using the second reactor feed as specified in the foregoing, and/or operating the second reactor within the hydrocracking operating conditions specified in the foregoing, and/or in the presence of a HC catalyst as defined hereinafter, particularly in the presence of a non-sulphided bifunctional HC catalyst as defined hereinafter, preferably a non-sulphided bifunctional HC catalyst comprising at least one or more Group VIII noble metals, more preferably Pt and/or Pd.

Typically, the hydrocracking effluent (step I)) and/or the recycle effluent (step ii)) comprise(s) at least 60 wt-%, preferably at least 70 wt-%, more preferably at least 80 wt-%, even more preferably at least 90 wt-% or at least 95 wt-% paraffins of the total weight of the hydrocracking effluent or the recycle effluent, respectively. The hydrocracking effluent (step I)) and/or the recycle effluent (step ii)) may even consist essentially of paraffins.

According to certain preferred embodiments, the hydrocracking effluent (step I)) and/or the recycle effluent (step ii)) comprise(s) at least 50 wt-%, preferably at least 60 wt-%, more preferably at least 70 wt-%, even more preferably at least 80 wt-% isoparaffins of the total weight of paraffins in the hydrocracking effluent or the recycle effluent, respectively, and/or at least 3 wt-%, or at least 5 wt-%, or at least 10 wt-%, or at least 15 wt-%, or at least 20 wt-% multiple-branched isoparaffins of the total weight of paraffins in the hydrocracking effluent or the recycle effluent, respectively.

Preferably, the first reactor is operated at a higher temperature than the second reactor, when comparing the temperatures at the reactor inlets. The compared temperatures are the temperatures at the inlet of the first reactor and at the inlet of the second reactor, respectively, at a given time point, including short time intervals. In other words, the comparison is not made in this context between the highest temperatures during the whole run from starting the process to stopping it.

By operating the first reactor and the second reactor within the operating condition ranges specified in the foregoing, and especially when operating the first reactor at higher temperature than the second reactor, high degree of isomerisation may be reached in the first reactor while thermal cracking is controlled, decreased, or minimized in the second reactor, and content of multiple-branched isoparaffins in the HI effluent may be increased. At the same time desired degree of effective cracking may be achieved in the second reactor at milder operating conditions, especially at lower temperature, which improves the yield of hydrocarbons in the aviation fuel and gasoline boiling range, without excessive thermal cracking leading to gas formation.

Both the hydroisomerisation (HI) and hydrocracking (HC) catalysts may be arranged in one or more catalyst beds within the respective reactors. The HI catalyst and the HC catalyst may be arranged in at least one or more fixed bed(s), respectively. The HI catalyst may be any conventionally used HI catalyst and the HC catalyst may be any conventionally used HC catalyst. Preferably, the HI catalyst in the first reactor and the HC catalyst in the second reactor are bifunctional HI and HC catalysts respectively, more preferably non-sulphided bifunctional HI and HC catalysts respectively.

Bifunctional HI and HC catalysts comprise metal sites for catalysing (de)hydrogenation reactions and acid sites for catalysing isomerisation and cracking reactions. Bifunctional HI catalysts and bifunctional HC catalysts are well known in the field of oil refining and in the field of renewable fuel production. Bifunctional HI and HC catalysts are preferred because they have excellent catalytic performance providing synergistic effects between the metal sites and acid sites. Bifunctional HI and HC catalysts are also beneficial as access and diffusion of molecules to catalytic sites may be controlled by suitably selecting porosity characteristics of the catalyst, especially pore size, pore dimension, and/or pore interconnectivity in the catalyst.

In certain particularly preferred embodiments, the HI catalyst is a non-sulphided bifunctional HI catalyst and the HC catalyst is a non-sulphided bifunctional HC catalyst, and said non-sulphided bifunctional catalysts comprise, independently from each other, at least one or more metals selected from noble metals of Group VIII of the Periodic Table, more preferably from Pt and/or Pd, and at least one or more acidic porous materials, and wherein the paraffinic hydrocarbon feed and the second reactor feed each comprises less than 50 wt-ppm, preferably less than 30 wt-ppm, more preferably less than 10 wt-ppm sulphur of the total respective feed (ppm by weight, calculated as elemental S), as determined according to ISO 20846-2019.

The sulphur content may be determined according to ISO 20846-2019 from liquids or according to ASTM-D6667 from gaseous fractions.

Non-sulphided bifunctional catalysts are preferred because they do not require sulphidation during operation for maintaining their activity, and hence the sulphur content of various process streams may be kept low and less efficient H₂S separation and recovery is needed from various process streams. Especially non-sulphided bifunctional catalysts comprising noble-metals may be active at lower temperatures, and show higher selectivity for isomerisation reactions, compared to sulphided catalysts, but are sensitive to deactivation by H₂S.

Preferably, the paraffinic hydrocarbon feed comprises sulphur less than 50 wt-ppm, preferably less than 30 wt-ppm, more preferably less than 10 wt-ppm (ppm by weight, calculated as elemental S), as determined according to ISO 20846-2019. A very low sulphur content of the stream entering the first reactor is beneficial in that only very low amounts or essentially no H₂S is formed in the HI in the first reactor, and hence present in the HI effluent. In such embodiments, gas-liquid separation of the HI effluent before feeding it to the second reactor to be subjected to hydrocracking (step I)) is not necessary for protecting the HC catalyst in the second reactor, but gas-liquid separation of the HI effluent may nevertheless optionally be performed. The overall process may thus be simpler, and liquid transportation fuel component(s) with ultra-low sulphur content are obtainable. Furthermore, since less H₂S is present, also less corrosion is foreseen in the long-run, and potentially even less stringent corrosion resistance requirements could be applicable for some of the equipment materials.

Various different kinds of bifunctional HI and HC catalysts are commercially available, for example with different metals or metal combinations, different metal loadings, different acid strengths, and/or total acidities, and/or different porosities.

Bifunctional HC catalysts and bifunctional HI catalysts have similarities in the sense that both contain metal sites that are capable of catalysing (de)hydrogenation of n/i-paraffins to corresponding n/i-olefins, and acid sites that are capable of catalysing protonation of the n/i-olefins to n/i-carbocations, isomerisation of n-carbocations, or i-carbocations further, and/or cracking of n/i-carbocations into lighter n/i-olefin and lighter n/i-carbocation, and deprotonation of n/i-carbocations to n/i-olefins. Hydrogenation of the various n/i-olefins is catalysed again by the metal sites of these bifunctional catalysts to form n/i-paraffins. Whether isomerisation or cracking reactions prevail at given operating conditions and given feed composition, can be influenced especially by the characteristics of the bifunctional catalyst to be contacted with the feed. Such characteristics of the bifunctional catalyst include, for example, total acidity of the catalyst, number of Brønsted acid sites, strength and/or density of the acid sites, and content of the metal(s) in the catalyst.

Preferably, the bifunctional HI and HC catalysts comprise, independently from each other, at least one or more metals selected from Group VIII of the Periodic Table, preferably from noble metals of Group VIII, more preferably from Pt and/or Pd. Noble metals, particularly in the bifunctional HI catalyst, are preferred as they may provide higher selectivity towards isomerisation reactions under conditions of the first reactor, and are highly active at lower operating temperatures, compared to catalysts comprising only non-noble metals. High activity at lower temperatures provides a wider temperature range within which temperature may be adjusted, typically increased, during operation. Gradual catalyst deactivation occurring when the process is operated for longer time periods may be compensated to a certain extent by increasing temperature in the reactor.

Preferably, the bifunctional HI and HC catalysts comprise, independently from each other, at least one or more porous acidic materials having microporous, mesoporous, or hierarchical (micro-mesoporous) structure. Various zeolite-type materials such as SAPOs and zeolites are available providing desired acidity and porosity characteristics.

According to certain embodiments, the HI catalyst is a bifunctional HI catalyst, preferably a non-sulphided bifunctional HI catalyst, comprising
at least one or more metals selected from Group VIII of the Periodic Table, preferably from noble metals of Group VIII, more preferably from Pt and/or Pd; and
at least one or more acidic porous materials selected from zeolites and/or zeolite-type materials, wherein preferably at least one or more of the zeolites and/or zeolite-type materials has a framework type selected from AEL, ATO, AFO, MRE, MTT, MTW, TON, MRT, MOR, FER, and/or MWW, preferably at least one or more acidic porous materials selected from SAPO-11, SAPO-31, SAPO-41, ZSM-22, ZSM-23, ZSM-48, NU-10, ZBM-30, IZM-2, EU-2, and/or mordenite, more preferably at least one or more acidic porous materials selected from SAPO-11, SAPO-41, ZSM-23, and/or ZSM-48; and
optionally at least one or more of alumina, silica, amorphous silica-alumina, titanium alumina, titania, and/or zirconia.

This catalyst selection has been found to provide higher isomerisation selectivity in the first reactor that further contributes to achieving even higher amounts of isoparaffins, particularly multiple-branched isoparaffins, which can then be hydrocracked at lower temperature in the second reactor. The mentioned SAPOs and zeolites are commercially available with acidity and porosity characteristics that allow isomerisation, including multiple-branching, of n-paraffins, even of long-chained n-paraffins, such as C16+ paraffins.

Particularly for the hydrocracking reactions in the second reactor of the present process, bifunctional HC catalysts are beneficial because they have in addition to cracking activity also some isomerisation activity, and may be especially efficient in effective cracking. As further advantage, bifunctional HC catalysts comprising at least one or more metals selected from Group VIII noble metals, preferably from Pt and/or Pd, have been found to provide at relatively low temperatures a high activity compared to HC catalysts comprising non-noble metals, and thus even better control of thermal cracking. At low temperatures, the thermodynamic equilibrium tends to shift towards dearomatisation, thus reducing aromatics formation by side reactions. Providing the second reactor with a bifunctional HC catalyst may achieve an isoparaffin content (wt-% isoparaffins of the total weight of paraffins) in the recycle effluent and/or hydrocracking effluent that is not necessarily significantly lower than in the HI effluent, or may be the same or even higher.

Hence, according to certain embodiments, the hydrocracking catalyst is a bifunctional hydrocracking catalyst, preferably a non-sulphided bifunctional hydrocracking catalyst, comprising
at least one or more metals selected from Group VIII of the Periodic Table, Mo, Co, and/or W, preferably from Ni, Mo, Co, W, Pt, and/or Pd, more preferably from Pt and/or Pd; and
at least one or more acidic porous materials selected from zeolites, zeolite-type materials, and/or amorphous silica-alumina, wherein preferably at least one or more of the zeolites or zeolite-type materials has a framework type selected from MFI, BEA, FAU, MOR, FER, AEL, AFI, ATO, AFO, MRE, MTT, MTW, TON, and/or MRT, preferably at least one or more acidic porous materials selected from SAPO-5, SAPO-11, SAPO-31, SAPO-41, ZSM-22, ZSM-23, ZSM-43, ZSM-48, IZM-2, mordenite, beta-zeolites, Y-type zeolites, and/or amorphous silica-alumina, more preferably at least one or more acidic porous material selected from SAPO-5, SAPO-11, ZSM-23, beta-zeolites, Y-type zeolites, and/or amorphous silica-alumina; and
optionally at least one or more of alumina, silica, titanium alumina, titania, and/or zirconia.

In certain embodiments, the HI catalyst in the first reactor and the HC catalyst in the second reactor have different acidity-related characteristics. The acidity-related characteristics of acidic porous materials, such as zeolite, may include nature, number, and distribution, according to relative strength, of acid sites, and may be determined by well-known methods, for example by adsorption-desorption methods where release of adsorbed base substance like ammonia or pyridine at higher temperature indicates presence of strong acid sites. As one example of usable adsorption-desorption methods, a temperature programmed desorption of ammonia can be mentioned, for examples as performed in accordance with the procedure described in Niwa et al (Niwa, M., Katada, N. Measurements of acidic property of zeolites by temperature programmed desorption of ammonia. Catalysis Surveys from Asia 1, 215-226 (1997)). Yet another well-known method for determining the acidic property of zeolites, including strength of acidity, is ¹H-NMR method, for examples as performed in accordance with the procedure described in Heeribout et al (Heeribout L., Semmer V., Batamack P., Dorémieux-Morin C., Fraissard J. Brønsted acid strength of zeolites studied by 1H NMR: scaling, influence of defects. Microporous and Mesoporous Materials, Volume 21, Issues 4-6, May 1998, Pages 565-570). In certain embodiments, the bifunctional HC catalyst of the second reactor has a higher number of Bronsted acid sites compared to the bifunctional HI catalyst of the first reactor, as determined by NH₃-TPD. In certain embodiments, the bifunctional HC catalyst has a higher total number of acid sites compared to the bifunctional HI catalyst, as determined by NH₃-TPD.

In certain preferred embodiments, the bifunctional HC catalyst of the second reactor has a higher content (wt-%) of Group VIII noble metal(s) compared to the bifunctional HI catalyst of the first reactor. In these embodiments as good or better yields of aviation fuel component were achieved at lower temperature, compared to otherwise similar process but using bifunctional HC catalyst that does not have a higher content of said noble metal(s) compared to the bifunctional HI catalyst.

If one of the HI catalyst of the first reactor and HC catalyst of the second reactor deactivates faster than the other, then the need to change the catalyst(s) to fresh one(s) or regenerate the catalyst(s) may be determined based on the faster deactivating catalyst.

In the present process, a paraffinic hydrocarbon feed is subjected to HI in the presence of a HI catalyst, and a recycle stream and a hydroisomerisation effluent are subjected to hydrocracking in the presence of a HC catalyst. The HI catalyst and the HC catalyst may have similar or same components. According to a preferred embodiment, the HI catalyst and the HC catalyst are different from each other. The HI catalyst and the HC catalyst may differ from each other for example by selection of at least one or more of a catalyst component, acidity, and/or metal loading, just to name a few, but it is also possible to use same catalyst as the HI catalyst in the first reactor and as the HC catalyst in the second reactor. Not merely the catalyst but also the operating conditions and the composition of the feed contribute to which reactions prevail. For example, when contacting the recycle stream or the HI effluent with the HC catalyst under the hydrocracking conditions, more cracking may be expected compared to contacting the paraffinic hydrocarbon feed with the HI catalyst under the HI conditions, even if the catalysts were the same. Preferably, when contacting the paraffinic hydrocarbon feed with the HI catalyst under the HI conditions isomerisation of this feed prevails over cracking, and when contacting the recycle stream or the HI effluent with the HC catalyst under the hydrocracking conditions, cracking of this feed prevails over isomerisation.

The HI catalyst and the HC catalyst may be in ready-to-use state as such or they may be as treated in any customary way to adjust their properties, such as selectivity and/or activity, before or during start-up by subjecting to reduction, sulphidation, and/or passivation for example with a nitrogen containing compound, such as an amine or ammonia, so as to obtain the ready-to-use fresh or regenerated HI catalyst and/or HC catalyst. As used herein, HI catalyst, HC catalyst, fresh catalyst, and regenerated catalyst generally refer to the catalyst in its ready-to-use state.

In certain embodiments, the hydrocracking is followed by a further hydroisomerisation in the presence of a further HI catalyst. The further HI may be achieved for example by arranging the further HI catalyst in at least one separate bed in the second reactor.

The further HI catalyst may be a HI catalyst as has been described in the foregoing in connection with the HI catalyst in the first reactor. Preferably, the further HI catalyst is a bifunctional HI catalyst, more preferably a non-sulphided bifunctional HI catalyst. The HI catalyst in the first reactor and the optional further HI catalyst in the second reactor may have different characteristics and/or composition, or may have same characteristics and compositions, i.e. they may be different catalysts or same catalysts. For process simplicity it is preferred that the further HI catalyst is same catalyst as the HI catalyst. In those embodiments, it is then preferred that the HC catalyst is different from the HI catalyst and the optional further HI catalyst.

The present process may comprise hydrodearomatisation (HDA) of one or more process streams or products. In certain embodiments, the process comprises subjecting at least one or more of the HI effluent, the hydrocracking effluent, the recycle effluent, the recycle stream, the recovered liquid transportation fuel component(s), and/or any fraction thereof, in a HDA reactor to hydrodearomatisation in the presence of a HDA catalyst to reduce the level of aromatic hydrocarbons for example to less than 5000 w-ppm, or less than 300 w-ppm, preferably to less than 100 w-ppm, or less than 50 w-ppm, preferably as determined according to UOP 495-03.

The HDA step may be beneficial especially if the paraffinic hydrocarbon feed fed to the first reactor comprises elevated amounts of aromatics, and/or if the HI in the first reactor and/or hydrocracking in the second reactor are operated using catalyst(s) and/or conditions promoting formation of aromatics as side-reactions, or if ultra-low aromatics content is desired for all or some of the recovered liquid transportation fuel components or for other product fractions possibly recovered from the process. Examples of such other product fractions include product fractions intended for use in cosmetics, pharmaceuticals, and/or other applications involving close contact to humans.

The HDA is preferably conducted at a temperature within a range from 80 °C to 350 °C, a pressure within a range from 3 MPa to 16 MPa, a liquid hourly space velocity within a range from 0.2 to 8 hr⁻¹, H₂ to HDA reactor feed ratio within a range from 50 to 2000 normal liters H₂ per liter HDA reactor feed.

The HDA may be conducted using any catalyst conventionally used for hydrodearomatisation. Preferably, non-sulphided catalysts comprising noble metals are used as these are active in HDA already at lower temperatures, which is beneficial as at low temperatures thermodynamic equilibrium tends to shift towards dearomatisation. Additionally, in embodiments wherein also the first reactor and the second reactors are operated using non-sulphided noble-metal catalysts, no sulphur needs to be added for keeping the catalyst active, and less or no effort is needed for separating sulphur containing compounds, especially H₂S, from gaseous fractions of the effluents of the first reactor, second reactor, and/or had reactor, and the recovered liquid transportation fuel component(s), and optional other product fractions, are obtainable with both ultra-low aromatics and sulphur content.

The present process comprises a fractionation in which at least one or more liquid transportation fuel components are recovered and the recycle stream (and optional further recycle stream) may be separated. The amount of recycle stream separated, and the amount of recycle stream fed to the second reactor may vary within broad ranges. Further liquid streams or cuts, such as side cut(s), may optionally be separated and/or recovered in the fractionation, and optionally recycled back to the process.

Preferably, in step iii) the weight-ratio of the recycle effluent to the HI effluent subjected to fractionation is from 1:10 to 10:1, such as from 1:5 to 5:1. Preferably, said ratios are recycle effluent to HI effluent. Ratios of recycle effluent to HI effluent towards the lower limits may be preferred when processing paraffinic hydrocarbon feeds boiling at lower temperatures, and ratios towards the upper limits may be preferred when processing paraffinic hydrocarbon feeds boiling at higher temperatures, such as paraffinic feeds comprising paraffins heavier than C18.

The fractionation of the present process may comprise any conventionally used fractionation technology. Preferably, the fractionation comprises distillation, such as atmospheric distillation or vacuum distillation, optionally preceded by a gas-liquid separation e.g. as described hereinafter.

The fractionation may be carried out in a fractionation system comprising one or more fractionation units. For example, gases and light naphtha may be separated in a pre-fractionation unit, while the liquid transportation fuel component(s) and the recycle stream are recovered and separated from a main distillation unit downstream of the pre-fractionation unit. In an alternative example, a single fractionation unit may be used.

As mentioned, in the first mode the recycle effluent and/or the HI effluent may be subjected to gas-liquid separation, as combined or independently from each other. Similarly, in the second mode the hydrocracking effluent and/or the HI effluent may be subjected to gas-liquid separation. The gas-liquid separation may be conducted for example as an integral step within the respective reactor, or within the fractionation system. Typically, the gas-liquid separation is conducted at a temperature within a range from 0 °C to 500 °C, such as from 15°C to 300°C, or from 15 °C to 150 °C, preferably from 15 °C to 65 °C, such as from 20 °C to 60 °C, and preferably at the same pressure as that of the reactor wherefrom the effluent originates. Typically, the pressure during the gas-liquid separation(s) may be within a range from 0.1 MPa to 20 MPa, preferably from 1 MPa to 10 MPa, or from 3 MPa to 7 MPa.

According to certain embodiments of the present process, different products as liquid transportation fuel components may be recovered from the fractionation depending e.g. on the operating conditions chosen, composition of the used paraffinic feed, and/or market demand at a given time.

The liquid transportation fuel component(s) and optional further products separated and/or recovered from the fractionation may for example include gasoline fuel component(s) boiling within a range from about 25 °C to about 200 °C, aviation fuel component(s) boiling within a range from about 100 °C to about 300 °C, such from about 150 °C to about 300 °C, a recycle stream having a T5 temperature of at least 270°C, diesel fuel component(s) boiling within a range from about 160 °C to about 380 °C, and/or marine fuel component(s) boiling within a range from about 180 °C to about 600 °C, such as from about 180 °C to about 400 °C (boiling within the ranges as determined according to EN ISO 3405-2019). In certain embodiments, gasoline fuel component(s) boiling within the range from about 25 °C to about 200 °C, aviation fuel component(s) boiling within the range from about 100 °C to about 300 °C, such from about 150 °C to about 300 °C, and a recycle stream having a T5 temperature of at least 270°C are first recovered and/or separated from the fractionation, and diesel fuel component(s) boiling within the range from about 160 °C to about 380 °C and/or marine fuel component(s) boiling within the range from about 180 °C to about 600 °C (boiling within the ranges as determined according to EN ISO 3405-2019), are recovered from the separated recycle stream. Further products may be recovered from the fractionation, such as split or further separated from the recycle stream. Examples of such further products include components for solvents, electrotechnical fluids, and base oils.

With the present process it is possible to produce an extremely low viscosity aviation fuel component, having a lower freezing point, and especially a lower kinematic viscosity at -20 °C, compared to an aviation fuel component having similar IBP and FBP, but produced by conventional HDO of fatty feedstock followed by HI, i.e. without subjecting to hydrocracking as in the present process.

Hence, in preferred embodiments of the present process, in steps iii) and II) at least one of the liquid transportation fuel components recovered from the fractionation is an aviation fuel component having density at 15 °C within a range from 730 to 772 kg/m³ (EN ISO 12185-1996), T10 temperature at most 205 °C (EN ISO 3405-2019), final boiling point at most 300 °C (EN ISO 3405-2019), flash point at least 38°C (IP 170-2013, Abel closed-cup method), and freezing point at most -40 °C (IP 529-2016). In these embodiments the recovered aviation fuel component is of high quality, and can be incorporated in aviation fuel compositions in elevated amounts. Typically, the recovered aviation fuel component has T10 and T90 temperatures, as determined according to EN ISO 3405-2019, within a range from 120 °C to 295 °C, preferably within a range from 130 °C to 295°C.

The present process enables recovery of at least an aviation fuel component in surprisingly high yields, even towards the end of the HI catalyst lifecycle. In certain preferred embodiments of the present process, the aviation fuel component is recovered in a yield of at least 30 wt-%, preferably at least 40 w%, more preferably at least 50 w%, such as from 30 wt-% to 90 wt-% of the total weight of the paraffinic hydrocarbon feed. This is believed to be due to the high content of C8-C14 hydrocarbons and isoparaffins in the feed subjected to fractionation, of which a notable share is multiple-branched isoparaffins. In certain preferred embodiments, the aviation fuel component has a difference between T90 and T10 temperatures, as determined according to EN ISO 3405-2019, at least 70 °C, preferably at least 75 °C, more preferably at least 80 °C, even more preferably at least 85 °C, typically at most 180°C, such as within a range from 80 °C to 150°C, preferably from 80 °C to 130°C. In these embodiments the aviation fuel component may be recovered with improved yields, while reaching the desired cold properties, density, and flash point characteristics. Poor quality of the total feed fed to the fractionation would necessitate limiting the FBP heavily in order to meet the cold property requirements, which would limit also the T90 temperature, and make the T90-T10 difference narrower. However, here the present process enables providing excellent characteristics including high isomerisation degree, particularly very high multiple-branched i-paraffin content, and modified distillation characteristics as the amounts of the carbon numbers are more evenly distributed, particularly in the C6-C18 range.

Typically in the present process, in steps iii) and II) at least one or more of an aviation fuel component, a diesel fuel component, a gasoline fuel component, and/or a marine fuel component is recovered from the fractionation, preferably at least an aviation fuel component, more preferably at least an aviation fuel component and a diesel fuel component, or at least an aviation fuel component and a gasoline fuel component, even more preferably at least an aviation fuel component, a diesel fuel component, and a gasoline fuel component, are recovered from the fractionation. Generally, it is preferred to recover from the fractionation at least periodically at least one heavy product such as a diesel fuel component, marine fuel component, and/or a base oil component. In this way, the heaviest components can be removed from the recycle loop.

In certain preferred embodiments, the recovered liquid transportation fuel components have a biogenic carbon content (EN 16640 (2017)) of at least 50 wt-%, preferably at least 70 wt-%, more preferably at least 90 wt-%, further preferably at least 95 wt-%, or even about 100 wt-%, based on the total weight of carbon (TC) in the respective recovered liquid transportation fuel component. The biogenic carbon content in the recovered liquid transportation fuel component(s) is mainly influenced by the biogenic carbon content in the paraffinic hydrocarbon feed, in certain preferred embodiments by the oxygenated hydrocarbon feed subjected to HDO. However, e.g. any amounts of fossil hydrocarbon diluent fed to the HDO reactor may affect the biogenic carbon content of the recovered liquid transportation fuel component(s).

Typically, the recovered liquid transportation fuel component(s) have improved (increased) isoparaffin content, particularly multiple-branched isoparaffin content, compared to corresponding component(s) obtained by conventional HDO of fatty feedstock followed by HI, i.e. without subjecting to hydrocracking as in the present process. A typical aviation fuel component recovered from the present process comprises C6 to C18 i-paraffins at least 85 wt-%, preferably at least 87 wt-%, more preferably at least 90 wt-%, even more preferably at least 92 wt-% of the total aviation fuel component weight; and/or C6-C18 multiple-branched i-paraffins at least 58 wt-%, preferably at least 60 wt-%, more preferably at least 62 wt-% of the total aviation fuel component weight. A typical diesel fuel component recovered from the present process comprises C15-C22 i-paraffins at least 70 wt-%, preferably at least 75 wt-%, more preferably at least 80 wt-%, even more preferably at least 90 wt-% of the diesel fuel component weight; and/or C15-C22 multiple-branched i-paraffins at least 60 wt-%, preferably at least 63 wt-%, more preferably at least 65 wt-% of the diesel fuel component weight. A typical gasoline fuel component recovered from the present process comprises at least 50 wt-%, preferably at least 55 wt-%, more preferably at least 60 wt-%, even more preferably at least 65 wt-% C4-C9 i-paraffins of the gasoline fuel component weight; and/or at least 5 wt-%, preferably at least 6 wt-%, more preferably at least 7 wt-%, even more preferably at least 10 wt-%, or at least 11 wt-% C6-C9 multiple-branched i-paraffins of the gasoline fuel component weight.

Even if each of the gasoline fuel component, aviation fuel component, and diesel fuel component are recovered at the same time in the present process, they may be recovered as reasonably wide fractions. When the yield of the aviation fuel component is optimized, the diesel fuel component may be recovered as a narrower cut, or not at all.

Products recovered from the present process have excellent characteristics. The recovered liquid transportation fuel component(s) are suitable for use as blending components in fuel compositions, and may even be used, when suitably additized, as fuels as such, i.e. as unblended components. The recovered liquid transportation fuel component(s), and optional further products, are suitable for a wide range of various other uses, such as in feedstocks for industrial conversion processes, preferably in thermal cracking feedstocks, such as in steam cracking feedstocks, and/or in catalytic cracking feedstocks, in transformer oils, in heat-transfer media, in switchgear oils, in shock absorber oils, in insulating oils, in hydraulic fluids, in gear oils, in transmission fluids, in degreasing compositions, in penetrating oils, in anticorrosion compositions, in multipurpose oils, in metal working fluids, in rolling oils especially for aluminum, in cutting oils, in drilling fluids, in solvents, in lubricants, in extender oils, in carriers, in dispersant compositions, in demulsifiers, in extractants, in paint compositions, in coating fluids or pastes, in adhesives, in resins, in varnishes, in printing pastes or inks, in detergents, in cleaners, in plasticizing oils, in turbine oils, in hydrophobization compositions, in agriculture, in crop protection fluids, in construction, in concrete demoulding formulations, in electronics, in medical appliances, in compositions for car, electrical, textile, packaging, paper, cosmetic and/or pharmaceutical industry, and/or in manufacture of intermediates therefor. The relatively high isomerisation degree and elevated share of shorter carbon chains are foreseen to improve fluidity, pumping and mixing characteristics, and blendability of the recovered components and/or fractions. These are generally desired and beneficial properties for a wide range of uses, particularly involving spraying, injecting and/or admixing with other ingredients.

### Schematic presentation of the process

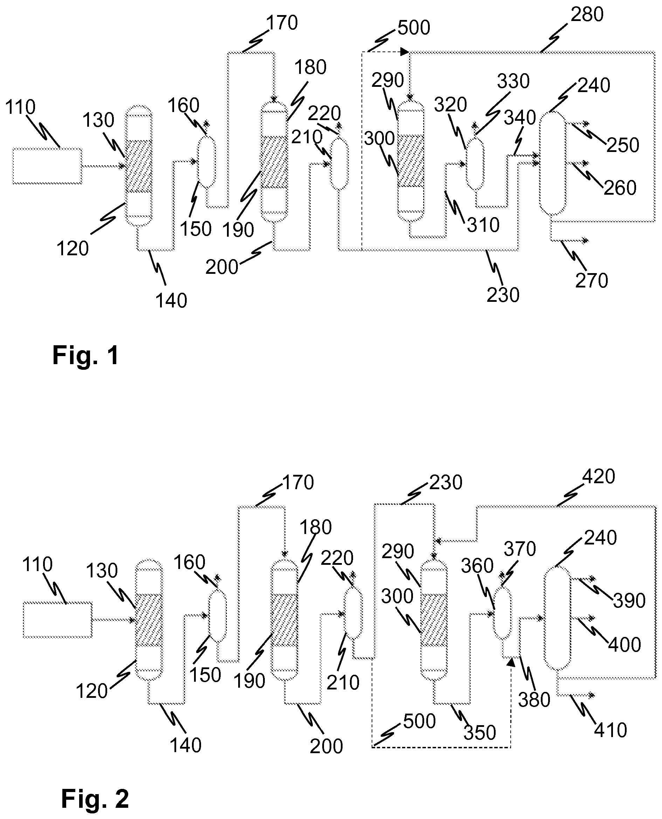

Fig. 1 schematically shows a process according to an example embodiment before switching from i), ii), iii) to I), II), i.e. running according to an example embodiment of i), ii), iii). In Fig. 1, oxygenated hydrocarbon feed 110 is fed to a HDO reactor 120 in which it is subjected to hydrodeoxygenation in the presence of a HDO catalyst 130 to obtain a hydrodeoxygenation effluent (HDO effluent) 140, and the obtained HDO effluent 140 is subjected to gas-liquid separation 150 to separate from the HDO effluent at least compounds that are gaseous at NTP 160 to obtain a degassed HDO effluent 170, which is in this example embodiment the herein described paraffinic hydrocarbon feed. The degassed HDO effluent 170 is in Fig. 1 then fed to a first reactor 180 in which the degassed HDO effluent 170 is subjected to hydroisomerisation in the presence of a HI catalyst 190 to obtain a HI effluent 200, and the obtained HI effluent 200 is subjected to gas-liquid separation 210 to separate from the HI effluent 200 at least compounds that are gaseous at NTP 220 to obtain a degassed HI effluent 230. In Fig. 1, the degassed HI effluent 230 is fed to a distillation unit 240, that may comprise a single column, or prefractionation and main distillation columns, from which several streams or cuts may be obtained. From the distillation in Fig. 1, a gasoline fuel component 250, an aviation fuel component 260, and/or a diesel fuel component 270 are recovered. Further, a recycle stream 280 having a T5 boiling point of 270 °C or higher is separated. The recycle stream 280 is in Fig. 1 fed to a second reactor 290 in which it is subjected to hydrocracking in the presence of a HC catalyst 300 to obtain a recycle effluent 310. In Fig. 1, the recycle effluent 310 is subjected to gas-liquid separation 320 to separate from the recycle effluent 310 at least compounds that are gaseous at NTP 330 to obtain a degassed recycle effluent 340, and the degassed recycle effluent 340 is then fed as a co-feed with the degassed HI effluent 230 to the distillation unit 240 for fractionation. In certain embodiments, a portion of the HI effluent 200, 230 may be fed as a co-feed 500 with the recycle stream 280 to hydrocracking in the second reactor 290.

Without limitation to the example embodiment of Fig 1, in certain preferred embodiments of the present process where at least an aviation fuel component is recovered from the fractionation, the monitored parameters indicative of deactivation of the HI catalyst, when run in the first mode, include two or more of the following: temperature e.g. as monitored at the inlet of the first reactor 180, WHSV in the first reactor 180, temperature difference over the first reactor 180 or over a bed of HI catalyst 190, cloud point and/or pour point of the degassed HI effluent 230, cloud point and/or pour point of the recycle stream 280 or the diesel fuel component 270, freezing point and/or one or more distillation characteristics of the aviation fuel component 260, the corresponding received values of which are compared with predetermined values. When the monitored parameter is the temperature e.g. as monitored at the inlet of the first reactor 180, the predetermined value may be e.g. max. 450°C; for WHSV in the first reactor 180 the predetermined value may be e.g. 6 kg paraffinic hydrocarbon feed per kg catalyst per hour; for the cloud point of the degassed HI effluent 230 the predetermined value may be e.g. max. -5°C; for the cloud point of the recycle stream 280 or the diesel fuel component 270 the predetermined value may be e.g. max. -15°C (ASTM D 5771-2017); for the freezing point of the aviation fuel component 260 the predetermined value may be e.g. max. -40°C (IP 529-201); for the distillation characteristics of the aviation fuel component 260 the predetermined value may be e.g. for T10 max. 205°C or for T90-T10 difference e.g. min. 22 °C (EN ISO 3405-2019); for the distillation characteristics of the diesel fuel component 270 the predetermined value may be e.g. T95 max. 360°C (EN ISO 3405-2019). When the values received for the monitored parameters reach the corresponding predetermined values, the process is switched to and run in the second mode. After switching, the monitored parameters and the predetermined values may be the same as in the first mode, or different parameters may be monitored, and/or different predetermined values selected, depending e.g. on whether same products and qualities thereof are still targeted.

Fig. 2 schematically shows a process according to an example embodiment after having switched from i), ii), iii) to I), II), i.e. running according to an example embodiment of I), II). In Fig. 2, oxygenated hydrocarbon feed 110 is fed to a HDO reactor 120 in which it is subjected to hydrodeoxygenation in the presence of a HDO catalyst 130 to obtain a hydrodeoxygenation effluent (HDO effluent) 140, and the obtained HDO effluent 140 is subjected to gas-liquid separation 150 to separate from the HDO effluent at least compounds that are gaseous at NTP 160 to obtain a degassed HDO effluent 170, which is in this example embodiment the herein defined paraffinic hydrocarbon feed. The degassed HDO effluent 170 is in Fig. 2 then fed to a first reactor 180 in which the degassed HDO effluent 170 is subjected to hydroisomerisation in the presence of a HI catalyst 190 to obtain a HI effluent 200, and the obtained HI effluent 200 is subjected to gas-liquid separation 210 to separate from the HI effluent 200 at least compounds that are gaseous at NTP 220 to obtain a degassed HI effluent 230. In Fig. 2, the degassed HI effluent 230 is fed to a second reactor 290 in which it is subjected to hydrocracking in the presence of a HC catalyst 300 to obtain a hydrocracking effluent 350, and the hydrocracking effluent 350 is subjected to gas-liquid separation 360 to separate from the hydrocracking effluent 350 at least compounds that are gaseous at NTP 370 to obtain a degassed hydrocracking effluent 380. In Fig. 2, the degassed hydrocracking effluent 380 is fed to a distillation unit 240, that may comprise a single column, or prefractionation and main distillation columns, from which several streams or cuts may be obtained. From the distillation in Fig. 2, a gasoline fuel component 390, an aviation fuel component 400, and a diesel fuel component 410 are recovered. Additionally, a further recycle stream 420 preferably having a T5 boiling point of 270 °C or higher may be separated, in which case the diesel fuel component 410 may be recovered by separating as a portion therefrom. In Fig. 2, the further recycle stream 420 may be fed to the second reactor 290 to hydrocracking as a co-feed with the degassed HI effluent 230. In certain embodiments, a portion of the HI effluent 200, 230 may be fed as a co-feed 500 with the hydrocracking effluent 350, 380 to the fractionation 240.

The process as described herein can be controlled by state of the art means, particularly by computer implemented means. In certain exemplary embodiments, the present process further comprises causing a control apparatus to perform at least the steps of comparing the received value(s) with predetermined value(s); and switching from i), ii), iii) to I), II). In certain exemplary embodiments, the present process is controlled by a computer program product, as defined as the third example aspect, comprising instructions which, when executed by a processor of a control apparatus in a system for producing at least one liquid transportation fuel component, cause the control apparatus to at least compare the received values with predetermined values, and when the received values reach the predetermined values to switch from i), ii), iii) to I), II) in the process as defined as the first example aspect. The control apparatus executing the instructions of the computer program product may be for example a general-purpose computer or some other electronic data processing apparatus comprising a processor and a (non-transient) memory. The instructions of the computer program product may be stored in the memory for execution by the processor to cause the operation of the control apparatus.

Various embodiments have been presented. It should be appreciated that in this document, words comprise, include, and contain are each used as open-ended expressions with no intended exclusivity.

The foregoing description has provided by way of non-limiting examples of particular implementations and embodiments a full and informative description of the best mode presently contemplated by the inventors for carrying out the invention.

As such, the foregoing description shall be considered as merely illustrative of the principles of the present invention, and not in limitation thereof. Hence, the scope of the invention is only restricted by the appended patent claims.

## Claims

1. A process for producing at least one liquid transportation fuel component, the process comprising:
providing a paraffinic hydrocarbon feed comprising at least 60 wt-% paraffins of the total weight of the paraffinic hydrocarbon feed, of which paraffins at most 30 wt-% are isoparaffins;
subjecting the paraffinic hydrocarbon feed in a first reactor to hydroisomerisation in the presence of a hydroisomerisation catalyst to obtain a hydroisomerisation effluent;
i) subjecting the hydroisomerisation effluent to fractionation to separate from the fractionation at least a recycle stream having a T5 temperature (5 vol-% recovered, EN ISO 3405-2019) of 270 °C or higher;
ii) subjecting a second reactor feed comprising the recycle stream to hydrocracking in a second reactor in the presence of a hydrocracking catalyst to obtain a recycle effluent;
iii) feeding the recycle effluent as a co-feed with the hydroisomerisation effluent to the fractionation, and recovering from the fractionation at least one or more liquid transportation fuel components; and
monitoring parameters indicative of deactivation of the hydroisomerisation catalyst to receive values;
comparing the received values with predetermined values; and
when the received values reach the predetermined values switching from i), ii), iii) to:
I) subjecting a second reactor feed comprising the hydroisomerisation effluent to hydrocracking in the second reactor in the presence of the hydrocracking catalyst to obtain a hydrocracking effluent;
II) subjecting the hydrocracking effluent to fractionation, and recovering from the fractionation at least one or more liquid transportation fuel components.

2. The process according to claim 1, wherein the parameters indicative of deactivation of the hydroisomerisation catalyst comprise at least two or more of:
a. content of an impurity in the paraffinic hydrocarbon feed, preferably content of at least one or more of N, S, O, P, Si, Cl, Fe, alkali metals, alkaline earth metals, and/or coke-forming compounds in the paraffinic hydrocarbon feed;
b. content of NH₃ and/or H₂S in the gaseous phase of the hydroisomerisation effluent;
c. physico-chemical characteristics of the hydroisomerisation effluent, preferably at least one or more of a cloud point, freezing point, pour point, cold filter plugging point, kinematic viscosity, density, and/or a distillation characteristic;
d. compositional characteristics of the hydroisomerisation effluent, preferably at least one or more of content of isoparaffins, content of C8-C14 hydrocarbons, content of multiple-branched isoparaffins, and/or content of C1-C4 hydrocarbons in the hydroisomerisation effluent;
e. yield of at least one or more of the recovered liquid transportation fuel component(s) and/or the separated recycle stream, preferably yield of an aviation fuel component;
f. physico-chemical characteristics of at least one or more of the recovered liquid transportation fuel component(s) and/or of the separated recycle stream, preferably at least one or more of a cloud point, freezing point, pour point, cold filter plugging point, kinematic viscosity, density, research octane number (RON), cetane number, and/or a distillation characteristic;
g. compositional characteristics of at least one or more of the recovered liquid transportation fuel component(s) and/or the recycle stream, preferably content of isoparaffins and/or content of multiple-branched isoparaffins in one or more of the recovered liquid transportation fuel component(s) and/or of the separated recycle stream;
h. temperature difference over the first reactor, or over one or more catalyst bed therein; and/or
i. operating condition(s) in the first reactor selected from temperature, pressure, weight hourly space velocity (WHSV), H₂ to paraffinic hydrocarbon feed ratio, and/or H₂ partial pressure at the inlet of the first reactor.

3. The process according to claim 1 or 2, comprising in step II) recovering from the fractionation a further recycle stream having a T5 temperature (5 vol-% recovered, EN ISO 3405-2019) of 270 °C or higher, and feeding the further recycle stream as part of the second reactor feed to the second reactor; and/or
wherein the recycle stream and the optional further recycle stream comprise C16 n-paraffins.

4. The process according to any one of the preceding claims, comprising in step ii) feeding a portion of the hydroisomerisation effluent as part of the second reactor feed to hydrocracking in the second reactor; and/or in step II) feeding a portion of the hydroisomerisation effluent as a co-feed with the hydrocracking effluent to fractionation.

5. The process according to any one of the preceding claims, the switching comprising feeding in step i) a gradually decreasing portion of the hydroisomerisation effluent to the fractionation and at the same time in step ii) a gradually increasing portion of the hydroisomerisation effluent as part of the second reactor feed to hydrocracking until the process is run according to I) and II).

6. The process according to any one of the preceding claims, wherein
the hydroisomerisation in the first reactor is conducted at a temperature within a range from 200 °C to 500 °C, preferably from 230 °C to 500 °C, more preferably from 250 °C to 450 °C, even more preferably from 280 °C to 400 °C, a pressure within a range from 1 MPa to 10 MPa, preferably from 2 MPa to 8 MPa or from 3 MPa to 10 MPa, a H₂ partial pressure at the inlet of the first reactor within a range from 1 MPa to 10 MPa, preferably from 2 MPa to 8 MPa, a weight hourly space velocity within a range from 0.1 to 10, preferably from 0.2 to 8, more preferably from 0.4 to 6 kg paraffinic hydrocarbon feed per kg catalyst per hour, and a H₂ to paraffinic hydrocarbon feed ratio within a range from 10 to 2000, preferably from 50 to 1000 normal liters H₂ per liter paraffinic hydrocarbon feed; and/or
the hydrocracking in the second reactor is conducted at a temperature within a range from 200 °C to 450 °C, preferably from 220 °C to 430 °C, more preferably from 280 °C to 350 °C, a pressure within a range from 0.4 MPa to 8 MPa, preferably from 1 MPa to 7 MPa, more preferably from 2.5 MPa to 7 MPa, a H₂ partial pressure at the inlet of the second reactor within a range from 0.4 MPa to 8 MPa, preferably from 1 MPa to 7 MPa, more preferably from 2.5 MPa to 7 MPa, a weight hourly space velocity within a range from 0.1 to 10, preferably from 0.2 to 8, more preferably from 0.4 to 6, even more preferably from 0.5 to 1.5 kg second reactor feed per kg catalyst per hour, and a H₂ to second reactor feed ratio within a range from 10 to 2000, preferably from 50 to 1000 normal liters H₂ per liter second reactor feed; and/or wherein the first reactor is operated at a higher temperature than the second reactor.

7. The process according to any one of the preceding claims, wherein the hydroisomerisation effluent comprises at least 50 wt-%, preferably at least 60 wt-%, more preferably at least 70 wt-%, even more preferably at least 80 wt-% isoparaffins of the total weight of paraffins in the hydroisomerisation effluent; and/or at least 5 wt-%, preferably at least 10 wt-%, more preferably at least 15 wt-%, or at least 20 wt-% multiple-branched isoparaffins of the total weight of paraffins in the hydroisomerisation effluent; and/or the hydroisomerisation effluent has a cloud point less than 0 °C, preferably less than -5 °C, more preferably less than -8°C, even more preferably less than -10 °C, or less than -15 °C (ASTM D 5771-17).

8. The process according to any one of the preceding claims, wherein the hydroisomerisation catalyst is a non-sulphided bifunctional hydroisomerisation catalyst and the hydrocracking catalyst is a non-sulphided bifunctional hydrocracking catalyst, and said non-sulphided bifunctional catalysts comprise at least one or more metals selected from noble metals of Group VIII of the Periodic Table, more preferably from Pt and/or Pd, and at least one or more acidic porous materials, and wherein the paraffinic hydrocarbon feed and the second reactor feed each comprises less than 50 wt-ppm, preferably less than 30 wt-ppm, more preferably less than 10 wt-ppm sulphur of the total respective feed (ppm by weight, calculated as elemental S), as determined according to ISO 20846-2019; and/or
wherein the hydroisomerisation catalyst and the hydrocracking catalyst are different from each other.

9. The process according to any one of the preceding claims, wherein the hydrocracking catalyst is a bifunctional hydrocracking catalyst, preferably a non-sulphided bifunctional hydrocracking catalyst, comprising
at least one or more metals selected from Group VIII of the Periodic Table, Mo, Co, and/or W, preferably from Ni, Mo, Co, W, Pt, and/or Pd, more preferably from Pt and/or Pd; and
at least one or more acidic porous materials selected from zeolites, zeolite-type materials, and/or amorphous silica-alumina, wherein preferably at least one or more of the zeolites or zeolite-type materials has a framework type selected from MFI, BEA, FAU, MOR, FER, AEL, AFI, ATO, AFO, MRE, MTT, MTW, TON, and/or MRT, preferably at least one or more acidic porous materials selected from SAPO-5, SAPO-11, SAPO-31, SAPO-41, ZSM-22, ZSM-23, ZSM-43, ZSM-48, IZM-2, mordenite, beta-zeolites, Y-type zeolites, and/or amorphous silica-alumina, more preferably at least one or more acidic porous material selected from SAPO-5, SAPO-11, ZSM-23, beta-zeolites, Y-type zeolites, and/or amorphous silica-alumina; and
optionally at least one or more of alumina, silica, titanium alumina, titania, and/or zirconia.

10. The process according to any one of the preceding claims, wherein the hydroisomerisation catalyst is a bifunctional hydroisomerisation catalyst, preferably a non-sulphided bifunctional hydroisomerisation catalyst, comprising
at least one or more metals selected from Group VIII of the Periodic Table, preferably from noble metals of Group VIII, more preferably from Pt and/or Pd; and
at least one or more acidic porous materials selected from zeolites and/or zeolite-type materials, wherein preferably at least one or more of the zeolites and/or zeolite-type materials has a framework type selected from AEL, ATO, AFO, MRE, MTT, MTW, TON, MRT, MOR, FER, and/or MWW, preferably at least one or more acidic porous materials selected from SAPO-11, SAPO-31, SAPO-41, ZSM-22, ZSM-23, ZSM-48, NU-10, ZBM-30, IZM-2, EU-2, and/or mordenite, more preferably at least one or more acidic porous materials selected from SAPO-11, SAPO-41, ZSM-23, and/or ZSM-48; and
optionally at least one or more of alumina, silica, amorphous silica-alumina, titanium alumina, titania, and/or zirconia.

11. The process according to any one of the preceding claims, wherein the paraffinic hydrocarbon feed comprises at least 70 wt-%, preferably at least 80 wt-%, more preferably at least 90 wt-% paraffins of the total weight of the paraffinic hydrocarbon feed; and/or at most 25 wt-%, preferably at most 20 wt-%, more preferably at most 15 wt-% isoparaffins of the total weight of paraffins in the paraffinic hydrocarbon feed; and/or at least 70 wt-%, preferably at least 80 wt-%, more preferably at least 90 wt-%, even more preferably at least 95 wt-% C12-C30 hydrocarbons of the total weight of the paraffinic hydrocarbon feed; and/or at least 70 wt-%, preferably at least 80 wt-%, more preferably at least 90 wt-%, even more preferably at least 95 wt-% C14-C22 hydrocarbons of the total weight of the paraffinic hydrocarbon feed; and/or
wherein the biogenic carbon content (EN 16640 (2017)) of the paraffinic hydrocarbon feed is at least 50 wt-%, preferably at least 70 wt-%, more preferably at least 90 wt-%, even more preferably at least 95 wt-%, or about 100 wt-% based on the total weight of carbon (TC) in the paraffinic hydrocarbon feed.

12. The process according to any one of the preceding claims, wherein the step of providing the paraffinic hydrocarbon feed comprises
subjecting a hydrotreatment feed to a catalytic hydrotreatment, preferably subjecting an oxygenated hydrocarbon feed to catalytic hydrodeoxygenation, to obtain a paraffinic hydrotreatment effluent, wherein the hydrotreatment feed preferably comprises at least one or more of vegetable oils, animal fats, microbial oils, thermally liquefied organic waste and residues, and/or enzymatically liquefied organic waste and residues, and/or
subjecting a syngas to a Fischer-Tropsch (FT) conversion to obtain a paraffinic FT effluent,
subjecting the paraffinic hydrotreatment effluent and/or the paraffinic FT effluent to a gas-liquid separation, and optionally to a paraffinic feed fractionation to provide the paraffinic hydrocarbon feed.

13. The process according to any one of the preceding claims, wherein in steps iii) and II) at least one or more of an aviation fuel component, a diesel fuel component, a gasoline fuel component, and/or a marine fuel component are recovered from the fractionation, preferably at least an aviation fuel component, more preferably at least an aviation fuel component and a diesel fuel component, or at least an aviation fuel component and a gasoline fuel component; and/or
wherein in steps iii) and II) at least an aviation fuel component having density at 15 °C within a range from 730 kg/m³ to 772 kg/m³ (EN ISO 12185-1996), T10 temperature at most 205 °C (EN ISO 3405-2019), final boiling point at most 300 °C (EN ISO 3405-2019), flash point at least 38 °C (IP 170-2013, Abel closed-cup method), and freezing point at most -40 °C (IP 529-2016) is recovered from the fractionation;
and/or
wherein the aviation fuel component is recovered in a yield of at least 30 wt-%, preferably within a range from 30 wt-% to 90 wt-% of the total weight of the paraffinic hydrocarbon feed.

14. A system for producing at least one liquid transportation fuel component, wherein the system is configured to run a process using i), ii), iii) or I), II), III) of the system, the system comprising:
means configured to provide a paraffinic hydrocarbon feed comprising at least 60 wt-% paraffins of the total weight of the paraffinic hydrocarbon feed, of which paraffins at most 30 wt-% are isoparaffins;
a first reactor configured to subject the paraffinic hydrocarbon feed in the first reactor to hydroisomerisation in the presence of a hydroisomerisation catalyst to obtain a hydroisomerisation effluent;
a fractionation system configured to i) subject the hydroisomerisation effluent to fractionation to separate from the fractionation at least a recycle stream having a T5 temperature (5 vol-% recovered, EN ISO 3405-2019) of 270 °C or higher, and to subject a recycle effluent to fractionation (following ii) and iii)); and to II) subject a hydrocracking effluent to fractionation;
a second reactor configured to ii) subject a second reactor feed comprising the recycle stream to hydrocracking in the second reactor in the presence of a hydrocracking catalyst to obtain a recycle effluent; and to I) subject a second reactor feed comprising the hydroisomerisation effluent to hydrocracking in the second reactor in the presence of the hydrocracking catalyst to obtain a hydrocracking effluent;
conduit(s) configured to iii) feed the recycle effluent and the hydroisomerisation effluent to the fractionation system, and to III) feed the hydrocracking effluent to the fractionation system;
means configured to recover from the fractionation system at least one or more liquid transportation fuel components; and
a control apparatus configured to monitor parameters indicative of deactivation of the hydroisomerisation catalyst to receive values; to compare the received values with predetermined values; and when the received values reach the predetermined values to switch from i), ii), iii) to I), II), III) of the system.

15. A computer program product comprising instructions which, when executed by a processor of a control apparatus in a system for producing at least one liquid transportation fuel component, cause in a process according to any one of claims 1 to 13 the control apparatus to compare the received values with predetermined values, and when the received values reach the predetermined values to switch from i), ii), iii) to I), II).

## Patentansprüche

1. Verfahren zum Herstellen zumindest einer flüssigen Transportkraftstoffkomponente, wobei das Verfahren umfasst:
Bereitstellen einer paraffinischen Kohlenwasserstoffeinspeisung, die mindestens 60 Gew.-% Paraffine des Gesamtgewichts der paraffinischen Kohlenwasserstoffeinspeisung umfasst, von welchen Paraffinen höchstens 30 Gew.-% Isoparaffine sind;
Unterziehen der paraffinischen Kohlenwasserstoffeinspeisung einer Hydroisomerisierung in der Gegenwart eines Hydroisomerisierungskatalysators in einem ersten Reaktor, um einen Hydroisomerisierungsausfluss zu erhalten;
i) Unterziehen des Hydroisomerisierungsausflusses einer Fraktionierung, um aus der Fraktionierung mindestens einen Rückführstrom abzutrennen, der eine T5-Temperatur (5 Vol.-%, rückgewonnen, EN ISO 3405-2019) von 270 °C oder höher aufweist;
ii) Unterziehen einer zweiten Reaktoreinspeisung, die den Rückführstrom umfasst, eines Hydrocrackens in Gegenwart eines Hydrocrackkatalysators in einem zweiten Reaktor, um einen Rückführausfluss zu erhalten;
iii) Einspeisen des Rückführausflusses als Co-Einspeisung mit dem Hydroisomerisierungsausfluss zur Fraktionierung und Rückgewinnen von mindestens einer oder mehreren flüssigen Transportkraftstoffkomponenten aus der Fraktionierung; und
Überwachen von Parametern, die auf eine Deaktivierung des Hydroisomerisierungskatalysators hinweisen, um Werte zu erhalten;
Vergleichen der erhaltenen Werte mit vorgegebenen Werten; und
wenn die erhaltenen Werte die vorgegebenen Werte erreichen, Umschalten von i), ii), iii) auf:
I) Unterziehen einer zweiten Reaktoreinspeisung, die den Hydroisomerisierungsausfluss umfasst, eines Hydrocrackens in Gegenwart des Hydrocrackkatalysators im zweiten Reaktor, um einen Hydrocrackausfluss zu erhalten;
II) Unterziehen des Hydrocrackausflusses einer Fraktionierung und Rückgewinnen von mindestens einer oder mehreren flüssigen Transportkraftstoffkomponenten aus der Fraktionierung.

2. Verfahren nach Anspruch 1, wobei die Parameter, die auf eine Deaktivierung des Hydroisomerisierungskatalysators hinweisen, mindestens zwei oder mehr umfassen von:
a. Gehalt einer Verunreinigung in der paraffinischen Kohlenwasserstoffeinspeisung, bevorzugt Gehalt von mindestens einem oder mehreren von N, S, O, P, Si, Cl, Fe, Alkalimetalle, Erdalkalimetalle und/oder koksbildende Verbindungen in der paraffinischen Kohlenwasserstoffeinspeisung;
b. Gehalt an NH₃ und/oder H₂S in der Gasphase des Hydroisomerisierungsausflusses;
c. physikalisch-chemische Eigenschaften des Hydroisomerisierungsausflusses, bevorzugt mindestens eine oder mehrere von Trübungspunkt, Gefrierpunkt, Pourpoint, Kaltfilterverstopfungspunkt, kinematische Viskosität, Dichte und/oder eine Destillationseigenschaft;
d. kompositionelle Eigenschaften des Hydroisomerisierungsausflusses, bevorzugt mindestens einer oder mehrere von Gehalt an Isoparaffinen, Gehalt an C8-C14-Kohlenwasserstoffen, Gehalt an mehrfach verzweigten Isoparaffinen und/oder Gehalt an C1-C4-Kohlenwasserstoffen im Hydroisomerisierungsausfluss;
e. Ausbeute von mindestens einer oder mehreren der rückgewonnenen flüssigen Transportkraftstoffkomponente(n) und/oder des abgetrennten Rückführstroms, bevorzugt Ausbeute einer Flugkraftstoffkomponente;
f. physikalisch-chemische Eigenschaften von mindestens einer oder mehreren der rückgewonnenen flüssigen Transportkraftstoffkomponente(n) und/oder des abgetrennten Rückführstroms, bevorzugt mindestens eine oder mehrere von Trübungspunkt, Gefrierpunkt, Pourpoint, Kaltfilterverstopfungspunkt, kinematische Viskosität, Dichte, Research-Oktanzahl (RON), Cetanzahl und/oder einer Destillationseigenschaft;
g. kompositionelle Eigenschaften von mindestens einer oder mehreren der rückgewonnenen flüssigen Transportkraftstoffkomponente(n) und/oder des Rückführstroms, bevorzugt Gehalt an Isoparaffinen und/oder Gehalt an mehrfach verzweigten Isoparaffinen in einer oder mehreren der rückgewonnenen flüssigen Transportkraftstoffkomponente(n) und/oder des abgetrennten Rückführstroms;
h. Temperaturunterschied über den ersten Reaktor oder über ein oder mehrere Katalysatorbetten darin; und/oder
i. Betriebsbedingung(en) im ersten Reaktor, ausgewählt aus Temperatur, Druck, gewichtsstündliche Raumgeschwindigkeit (WHSV), Verhältnis von H₂- zu paraffinischer Kohlenwasserstoffeinspeisung und/oder H₂-Partialdruck am Einlass des ersten Reaktors.

3. Verfahren nach Anspruch 1 oder 2, umfassend in Schritt II) Rückgewinnung aus der Fraktionierung eines weiteren Rückführstroms, der eine T5-Temperatur (5 Vol.-% rückgewonnen, EN ISO 3405-2019) von 270 °C oder höher aufweist, und Einspeisen des weiteren Rückführstroms als Teil der zweiten Reaktoreinspeisung in den zweiten Reaktor; und/oder wobei der Rückführstrom und der optionale weitere Rückführstrom C16-n-Paraffine umfassen.

4. Verfahren nach einem der vorstehenden Ansprüche, umfassend in Schritt ii) Einspeisung eines Anteils des Hydroisomerisierungsausflusses als Teil der zweiten Reaktoreinspeisung zum Hydrocracken im zweiten Reaktor; und/oder in Schritt II) Einspeisung eines Anteils des Hydroisomerisierungsausflusses als Co-Einspeisung mit dem Hydrocrackausfluss zur Fraktionierung.

5. Verfahren nach einem der vorstehenden Ansprüche, wobei das Umschalten Einspeisung in Schritt i) eines graduell abnehmenden Anteils des Hydroisomerisierungsausflusses in die Fraktionierung und zur gleichen Zeit in Schritt ii) eines graduell zunehmenden Anteils des Hydroisomerisierungsausflusses als Teil der zweiten Reaktoreinspeisung in das Hydrocracken umfasst, bis der Prozess gemäß I) und II) betrieben wird.

6. Verfahren nach einem der vorstehenden Ansprüche, wobei die Hydroisomerisierung im ersten Reaktor bei einer Temperatur in einem Bereich von 200 °C bis 500 °C, bevorzugt von 230 °C bis 500 °C, mehr bevorzugt von 250 °C bis 450 °C °C, noch mehr bevorzugt von 280 °C bis 400 °C, einem Druck in einem Bereich von 1 MPa bis 10 MPa, bevorzugt von 2 MPa bis 8 MPa oder von 3 MPa bis 10 MPa, einem H₂-Partialdruck am Einlass des ersten Reaktors in einem Bereich von 1 MPa bis 10 MPa, bevorzugt von 2 MPa bis 8 MPa, eine gewichtsstündliche Raumgeschwindigkeit in einem Bereich von 0,1 bis 10, bevorzugt von 0,2 bis 8, mehr bevorzugt von 0,4 bis 6 kg paraffinischer Kohlenwasserstoffeinspeisung pro kg Katalysator pro Stunde und ein Verhältnis von H₂- zu paraffinischer Kohlenwasserstoffeinspeisung in einem Bereich von 10 bis 2000, bevorzugt von 50 bis 1000 Normliter H₂ pro Liter paraffinischer Kohlenwasserstoffeinspeisung durchgeführt wird; und/oder
das Hydrocracken im zweiten Reaktor bei einer Temperatur im Bereich von 200 °C bis 450 °C, bevorzugt von 220 °C bis 430 °C, mehr bevorzugt von 280 °C bis 350 °C, einem Druck im Bereich von 0,4 MPa bis 8 MPa, bevorzugt von 1 MPa bis 7 MPa, mehr bevorzugt von 2,5 MPa bis 7 MPa, einem H₂-Partialdruck am Einlass des zweiten Reaktors in einem Bereich von 0,4 MPa bis 8 MPa, bevorzugt von 1 MPa bis 7 MPa, mehr bevorzugt von 2,5 MPa bis 7 MPa, eine gewichtsstündliche Raumgeschwindigkeit in einem Bereich von 0,1 bis 10, bevorzugt von 0,2 bis 8, mehr bevorzugt von 0,4 bis 6, noch mehr bevorzugt von 0,5 bis 1,5 kg zweiter Reaktoreinspeisung pro kg Katalysator pro Stunde und ein Verhältnis von H₂- zur zweiten Reaktoreinspeisung in einem Bereich von 10 bis 2000, bevorzugt von 50 bis 1000 Normliter H₂ pro Liter zweiter Reaktoreinspeisung, durchgeführt wird; und/oder
wobei der erste Reaktor bei einer höheren Temperatur als der zweite Reaktor betrieben wird.

7. Verfahren nach einem der vorstehenden Ansprüche, wobei der Hydroisomerisierungsausfluss mindestens 50 Gew.-%, bevorzugt mindestens 60 Gew.-%, mehr bevorzugt mindestens 70 Gew.-%, noch mehr bevorzugt mindestens 80 Gew.-% Isoparaffine des Gesamtgewichts der Paraffine im Hydroisomerisierungsausfluss; und/oder mindestens 5 Gew.-%, bevorzugt mindestens 10 Gew.-%, mehr bevorzugt mindestens 15 Gew.-% oder mindestens 20 Gew.-% mehrfach verzweigte Isoparaffine des Gesamtgewichts der Paraffine im Hydroisomerisierungsausfluss umfasst; und/oder der Hydroisomerisierungsausfluss einen Trübungspunkt von weniger als 0 °C, bevorzugt weniger als -5 °C, mehr bevorzugt weniger als -8 °C, noch mehr bevorzugt weniger als -10 °C oder weniger als -15 °C (ASTM D 5771-17), aufweist.

8. Verfahren nach einem der vorstehenden Ansprüche, wobei der Hydroisomerisierungskatalysator ein nicht-sulfidierter bifunktioneller Hydroisomerisierungskatalysator ist und der Hydrocrackkatalysator ein nicht-sulfidierter bifunktioneller Hydrocrackkatalysator ist, und besagte nicht-sulfidierten bifunktionellen Katalysatoren mindestens ein oder mehrere Metalle, ausgewählt aus Edelmetallen der Gruppe VIII des Periodensystems, mehr bevorzugt aus Pt und/oder Pd, und mindestens ein oder mehrere saure poröse Materialien umfassen, und wobei die paraffinische Kohlenwasserstoffeinspeisung und die zweite Reaktoreinspeisung jeweils weniger als 50 Gew.-ppm, bevorzugt weniger als 30 Gew.-ppm, mehr bevorzugt weniger als 10 Gew.-ppm Schwefel der jeweiligen Gesamteinspeisung (Gewichts-ppm, berechnet als elementares S), wie gemäß ISO 20846-2019 bestimmt, umfassen; und/oder
wobei der Hydroisomerisierungskatalysator und der Hydrocrackkatalysator voneinander verschieden sind.

9. Verfahren nach einem der vorstehenden Ansprüche, wobei der Hydrocrackkatalysator ein bifunktioneller Hydrocrackkatalysator ist, bevorzugt ein nicht-sulfidierter bifunktioneller Hydrocrackkatalysator, umfassend
mindestens ein oder mehrere Metalle, die aus Gruppe VIII des Periodensystems, Mo, Co und/oder W, bevorzugt aus Ni, Mo, Co, W, Pt und/oder Pd, mehr bevorzugt aus Pt und/oder Pd ausgewählt sind; und
mindestens ein oder mehrere saure poröse Materialien, die aus Zeolithen, Materialien vom Zeolith-Typ und/oder amorphem Siliciumdioxid-Aluminiumoxid ausgewählt sind, wobei bevorzugt mindestens eines oder mehrere der Zeolithe oder Materialien vom Zeolith-Typ einen Gerüsttyp aufweist, der aus MFI, BEA, FAU, MOR, FER, AEL, AFI, ATO, AFO, MRE, MTT, MTW, TON und/oder MRT ausgewählt ist, bevorzugt mindestens ein oder mehrere saure poröse Materialien, die aus SAPO-5, SAPO-11, SAPO-31, SAPO-41, ZSM-22, ZSM-23, ZSM-43, ZSM-48, IZM-2, Mordenit, Beta-Zeolithe, Zeolithe vom Y-Typ und/oder amorphes Siliciumdioxid-Aluminiumoxid ausgewählt sind, mehr bevorzugt mindestens ein oder mehrere saure poröse Material das aus SAPO-5, SAPO-11, ZSM-23, Beta-Zeolithen, Zeolithe vom Y-Typ und/oder amorphem Siliciumdioxid-Aluminiumoxid ausgewählt ist; und
optional mindestens eines oder mehrere von Aluminiumoxid, Siliciumdioxid, Titanaluminiumoxid, Titandioxid und/oder Zirkoniumdioxid.

10. Verfahren nach einem der vorstehenden Ansprüche, wobei der Hydroisomerisierungskatalysator ein bifunktioneller Hydroisomerisierungskatalysator ist, bevorzugt ein nicht-sulfidierter bifunktioneller Hydroisomerisierungskatalysator, umfassend
mindestens ein oder mehrere Metalle, die aus Gruppe VIII des Periodensystems, bevorzugt aus Edelmetallen der Gruppe VIII, mehr bevorzugt aus Pt und/oder Pd ausgewählt sind; und
mindestens ein oder mehrere saure poröse Materialien, die aus Zeolithen und/oder Materialien vom Zeolithtyp ausgewählt sind, wobei bevorzugt mindestens eines oder mehrere der Zeolithe und/oder Materialien vom Zeolithtyp einen Gerüsttyp aufweist, der aus AEL, ATO, AFO, MRE, MTT, MTW, TON, MRT, MOR, FER und/oder MWW ausgewählt ist, bevorzugt mindestens ein oder mehrere saure poröse Materialien, die aus SAPO-11, SAPO-31, SAPO-41, ZSM-22, ZSM-23, ZSM-48, NU-10, ZBM-30, IZM-2, EU-2 und/oder Mordenit ausgewählt sind, mehr bevorzugt mindestens ein oder mehrere saure poröse Materialien, die aus SAPO-11, SAPO-41, ZSM-23 und/oder ZSM-48 ausgewählt sind; und
optional mindestens eines oder mehrere von Aluminiumoxid, Siliciumdioxid, amorphem Siliciumdioxid-Aluminiumoxid, Titanaluminiumoxid, Titandioxid und/oder Zirkoniumdioxid.

11. Verfahren nach einem der vorstehenden Ansprüche, wobei die paraffinische Kohlenwasserstoffeinspeisung mindestens 70 Gew.-%, bevorzugt mindestens 80 Gew.-%, mehr bevorzugt mindestens 90 Gew.-% Paraffine des Gesamtgewichts der paraffinischen Kohlenwasserstoffeinspeisung und/oder höchstens 25 Gew.-%, bevorzugt höchstens 20 Gew.-%, mehr bevorzugt höchstens 15 Gew.-% Isoparaffinen des Gesamtgewichts der Paraffine in der paraffinischen Kohlenwasserstoffeinspeisung; und/oder mindestens 70 Gew.-%, bevorzugt mindestens 80 Gew.-%, mehr bevorzugt mindestens 90 Gew.-%, noch mehr bevorzugt mindestens 95 Gew.-% C12-C30-Kohlenwasserstoffe des Gesamtgewichts der paraffinischen Kohlenwasserstoffeinspeisung; und/oder mindestens 70 Gew.-%, bevorzugt mindestens 80 Gew.-%, mehr bevorzugt mindestens 90 Gew.-%, noch mehr bevorzugt mindestens 95 Gew.-% C14-C22-Kohlenwasserstoffe des Gesamtgewichts der paraffinischen Kohlenwasserstoffeinspeisung, umfasst; und/oder
wobei der biogene Kohlenstoffgehalt (EN 16640 (2017)) der paraffinischen Kohlenwasserstoffeinspeisung mindestens 50 Gew.-%, bevorzugt mindestens 70 Gew.-%, mehr bevorzugt mindestens 90 Gew.-%, noch mehr bevorzugt mindestens 95 Gew.-% oder etwa 100 Gew.-%, basierend auf dem Gesamtgewicht an Kohlenstoff (TC) in der paraffinischen Kohlenwasserstoffeinspeisung, ist.

12. Verfahren nach einem der vorstehenden Ansprüche, wobei der Schritt des Bereitstellens der paraffinischen Kohlenwasserstoffeinspeisung umfasst
Unterziehen einer Hydrobehandlungseinspeisung einer katalytischen Hydrobehandlung, bevorzugt Unterziehen einer oxygenierten Kohlenwasserstoffeinspeisung einer katalytischen Hydrodeoxygenierung, um einen paraffinischen Hydrobehandlungsausfluss zu erhalten, wobei die Hydrobehandlungseinspeisung bevorzugt mindestens eines oder mehrere von pflanzlichen Ölen, tierischen Fetten, mikrobiellen Ölen, thermisch verflüssigten organischen Abfällen und Rückständen und/oder enzymatisch verflüssigten organischen Abfällen und Rückständen umfasst, und/oder
unterziehen eines Synthesegases einer Fischer-Tropsch (FT)-Umwandlung, um einen paraffinischen FT-Ausfluss zu erhalten,
Unterziehen des paraffinischen Hydrobehandlungsausflusses und/oder des paraffinischen FT-Ausflusses einer Gas-Flüssigkeits-Trennung und optional einer paraffinischen Einspeisungsfraktionierung, um die paraffinische Kohlenwasserstoffeinspeisung bereitzustellen.

13. Verfahren nach einem der vorstehenden Ansprüche, wobei in den Schritten iii) und II) mindestens eine oder mehrere einer Flugkraftstoffkomponente, einer Dieselkraftstoffkomponente, einer Benzinkraftstoffkomponente und/oder einer Schiffskraftstoffkomponente aus der Fraktionierung rückgewonnen werden, bevorzugt mindestens eine Flugkraftstoffkomponente, mehr bevorzugt mindestens eine Flugkraftstoffkomponente und eine Dieselkraftstoffkomponente oder mindestens eine Flugkraftstoffkomponente und eine Benzinkraftstoffkomponente; und/oder
wobei in den Schritten iii) und II) mindestens eine Flugkraftstoffkomponente, die bei 15 °C Dichte im Bereich von 730 kg/m³ bis 772 kg/m³ (EN ISO 12185-1996), T10-Temperatur von höchstens 205 °C (EN ISO 3405-2019), Siedeende von höchstens 300 °C (EN ISO 3405-2019), Flammpunkt von mindestens 38 °C (IP 170-2013, Abel-Geschlossenes-Tiegel-Verfahren) und Gefrierpunkt von höchstens -40 °C (IP 529-2016) aufweist, aus der Fraktionierung rückgewonnen wird; und/oder
wobei die Flugkraftstoffkomponente in einer Ausbeute von mindestens 30 Gew.-%, bevorzugt innerhalb eines Bereichs von 30 Gew.-% bis 90 Gew.-% des Gesamtgewichts der paraffinischen Kohlenwasserstoffeinspeisung, rückgewonnen wird.

14. System zur Herstellung mindestens einer flüssigen Kraftstoffkomponente, wobei das System konfiguriert ist, um einen Prozess unter Verwendung von i), ii), iii) oder I), II), III) des Systems durchzuführen, wobei das System umfasst:
Mittel, die konfiguriert sind, um eine paraffinische Kohlenwasserstoffeinspeisung bereitzustellen, die mindestens 60 Gew.-% Paraffine des Gesamtgewichts der paraffinischen Kohlenwasserstoffeinspeisung umfasst, von denen höchstens 30 Gew.-% Isoparaffine sind;
einen ersten Reaktor, der konfiguriert ist, um die paraffinische Kohlenwasserstoffeinspeisung einer Hydroisomerisierung in Gegenwart eines Hydroisomerisierungskatalysators im ersten Reaktor zu unterziehen, um einen Hydroisomerisierungsausfluss zu erhalten;
ein Fraktionierungssystem, das konfiguriert ist, um i) den Hydroisomerisierungsausfluss einer Fraktionierung zu unterziehen, um aus der Fraktionierung mindestens einen Rückführstrom, der eine T5-Temperatur (5 Vol.-% rückgewonnen, EN ISO 3405-2019) von 270 °C oder höher aufweist, und einen Rückführausfluss einer Fraktionierung zu unterziehen (nach ii) und iii)); und um II) einen Hydrocrackausfluss einer Fraktionierung zu unterziehen;
ein zweiter Reaktor, der konfiguriert ist, um ii) eine zweite Reaktoreinspeisung, die den Rückführstrom umfasst, in Gegenwart eines Hydrocrackkatalysators einem Hydrocracken im zweiten Reaktor zu unterziehen, um ein Rückführausfluss zu erhalten; und um I) eine zweite Reaktoreinspeisung, die den Hydroisomerisierungsausfluss umfasst, in Gegenwart des Hydrocrackkatalysators einem Hydrocracken im zweiten Reaktor zu unterziehen, um ein Hydrocrackausfluss zu erhalten;
Leitung(en), die konfiguriert ist (sind), um iii) den Rückführausfluss und den Hydroisomerisierungsausfluss dem Fraktionierungssystem einzuspeisen und um III) den Hydrocrackausfluss dem Fraktionierungssystem einzuspeisen;
Mittel, die konfiguriert sind, um aus dem Fraktionierungssystem mindestens eine oder mehrere flüssige Transportkraftstoffkomponenten rückzugewinnen; und
eine Steuervorrichtung, die konfiguriert ist, um Parameter zu überwachen, die auf eine Deaktivierung des Hydroisomerisierungskatalysators hinweisen, um Werte zu empfangen; um die empfangenen Werte mit vorgegebenen Werten zu vergleichen; und um, wenn die empfangenen Werte die vorgegebenen Werte erreichen, von i), ii), iii) auf I), II), III) des Systems umzuschalten.

15. Computerprogrammprodukt, das Anweisungen umfasst, die, wenn von einem Prozessor einer Steuervorrichtung in einem System zur Herstellung mindestens einer flüssigen Transportkraftstoffkomponente ausgeführt, in einem Verfahren gemäß einem der Ansprüche 1 bis 13, die Steuervorrichtung veranlasst, die empfangenen Werte mit vorgegebenen Werten zu vergleichen und, wenn die empfangenen Werte die vorgegebenen Werte erreichen, von i), ii), iii) auf I), II) umzuschalten.

## Revendications

1. Procédé de production d'au moins un composant de carburant de transport liquide, le procédé comprenant les étapes de :
fournir une charge d'hydrocarbures paraffiniques comprenant au moins 60 % en poids de paraffines par rapport au poids total de la charge d'hydrocarbures paraffiniques, dont au plus 30 % en poids des paraffines sont des isoparaffines ;
soumettre la charge d'hydrocarbures paraffiniques dans un premier réacteur à une hydroisomérisation en présence d'un catalyseur d'hydroisomérisation pour obtenir un effluent d'hydroisomérisation ;
i) soumettre l'effluent d'hydroisomérisation à un fractionnement afin de séparer à partir du fractionnement au moins un flux de recyclage ayant une température T5 (5 % en volume récupéré, EN ISO3405-2019) de 270 °C ou plus ;
ii) soumettre une deuxième charge d'alimentation de réacteur comprenant le flux de recyclage à un hydrocraquage dans un deuxième réacteur en présence d'un catalyseur d'hydrocraquage pour obtenir un effluent de recyclage ;
iii) alimenter le flux de recyclage en tant que co-charge d'alimentation avec l'effluent d'hydroisomérisation pour le fractionnement, et récupérer à partir du fractionnement au moins un ou plusieurs carburant de transport liquides ; et
surveiller des paramètres indicatifs de la désactivation du catalyseur d'hydroisomérisation pour obtenir des valeurs ;
comparer les valeurs obtenues à des valeurs prédéterminées ; et
lorsque les valeurs obtenues atteignent les valeurs prédéterminées, commuter de i), ii), iii) à :
I) soumettre une deuxième charge d'alimentation de réacteur comprenant l'effluent d'hydroisomérisation à un hydrocraquage dans le deuxième réacteur en présence du catalyseur d'hydrocraquage pour obtenir un effluent d'hydrocraquage ;
II) soumettre l'effluent d'hydrocraquage à un fractionnement, et récupérer à partir du fractionnement au moins un ou plusieurs composants de carburant de transport liquides.

2. Procédé selon la revendication 1, dans lequel les paramètres indicatifs de la désactivation du catalyseur d'hydroisomérisation comprennent au moins deux ou plus des éléments suivants :
a. une teneur en impuretés de la charge d'hydrocarbures paraffiniques, de préférence une teneur en au moins un ou plus des éléments suivants : N, S, O, P, Si, CI, Fe, métaux alcalins, métaux alcalino-terreux et/ou composés formant du coke dans la charge d'hydrocarbures paraffiniques ;
b. une teneur en NH3 et/ou en H2S dans la phase gazeuse de l'effluent d'hydroisomérisation ;
c. des caractéristiques physico-chimiques de l'effluent d'hydroisomérisation, de préférence au moins une ou plus parmi un point de trouble, un point de congélation, un point d'écoulement, un point de colmatage à froid de filtre, une viscosité cinématique, une densité et/ou une caractéristique de distillation ;
d. des caractéristiques de composition de l'effluent d'hydroisomérisation, de préférence au moins une ou plus des caractéristiques suivantes : une teneur en isoparaffines, une teneur en hydrocarbures en C8 à C14, une teneur en isoparaffines à ramifications multiples et/ou une teneur en hydrocarbures en C1 à C4 dans l'effluent d'hydroisomérisation ;
e. un rendement d'au moins un ou plusieurs des composants de carburant de transport liquides récupérés et/ou du flux de recyclage séparé, de préférence un rendement d'un composant de carburant pour l'aviation ;
f. des caractéristiques physico-chimiques d'au moins un ou plus des composants du liquide de carburant de transport récupéré et/ou du flux de recyclage séparé, de préférence au moins un ou plus choisis parmi : un point de trouble, un point de congélation, un point d'écoulement, un point de colmatage à froid de filtre, une viscosité cinématique, une densité, un indice d'octane recherche (RON), un indice de cétane et/ou une caractéristique de distillation ;
g. des caractéristiques additionnelles de composition d'au moins un ou plus des composants du carburant de transport liquide récupéré et/ou du flux de recyclage, de préférence une teneur en isoparaffines et/ou une teneur en isoparaffines à ramifications multiples dans un ou plus des composants du carburant de transport liquide récupéré et/ou du flux de recyclage séparé ;
h. une différence de température dans le premier réacteur ou dans un ou plus de lits catalytiques de celui-ci ; et/ou
i. des conditions de fonctionnement dans le premier réacteur, choisies parmi une température, une pression, une vitesse spatiale horaire en poids (WHSV), un rapport d'alimentation en H₂ par rapport à des hydrocarbures paraffiniques et/ou une pression partielle d'H₂ à l'entrée du premier réacteur.

3. Procédé selon la revendication 1 ou 2, comprenant à l'étape II) la récupération à partir du fractionnement d'un autre flux de recyclage ayant une température T5 (5 % en volume récupéré, EN ISO 3405-2019) de 270 °C ou plus, et l'alimentation de l'autre flux de recyclage dans le deuxième réacteur en tant que partie d'alimentation du deuxième réacteur ; et/ou
dans lequel le flux de recyclage et l'autre flux de recyclage facultatif comprennent des n-paraffines en C16.

4. Procédé selon l'une quelconque des revendications précédentes, comprenant dans l'étape ii) l'alimentation d'une partie de l'effluent d'hydroisomérisation en tant que partie de l'alimentation du deuxième réacteur vers l'hydrocraquage dans le deuxième réacteur ; et/ou à l'étape II) l'alimentation d'une partie de l'effluent d'hydroisomérisation en tant que co-charge d'alimentation avec l'effluent d'hydrocraquage vers le fractionnement.

5. Le procédé selon l'une quelconque des revendications précédentes, la commutation comprenant l'alimentation, à l'étape i), d'une partie progressivement décroissante de l'effluent d'hydroisomérisation vers le fractionnement et, simultanément, à l'étape ii), d'une partie progressivement croissante de l'effluent d'hydroisomérisation en tant qu'une partie de l'alimentation du deuxième réacteur pour l'hydrocraquage jusqu'à ce que le procédé soit mis en œuvre conformément aux points I) et II).

6. Procédé selon l'une quelconque des revendications précédentes, dans lequel
l'hydroisomérisation dans le premier réacteur est effectuée à une température comprise dans une plage allant de 200 °C à 500 °C, de préférence de 230 °C à 500 °C, plus préférablement de 250 °C à 450 °C, de préférence encore de 280 °C à 400 °C, une pression comprise dans une plage allant de 1 MPa à 10 MPa, de préférence de 2 MPa à 8 MPa ou de 3 MPa à 10 MPa, une pression partielle de H₂ à l'entrée du premier réacteur dans une plage allant de 1 MPa et 10 MPa, de préférence de 2 MPa à 8 MPa, une vitesse spatiale horaire en poids comprise dans une plage allant de 0,1 à 10, de préférence de 0,2 à 8, plus préférablement de 0,4 à 6 kg d'alimentation en hydrocarbures paraffiniques par kg de catalyseur par heure, et un rapport d'alimentation en H₂ par rapport aux hydrocarbures paraffiniques compris dans une plage allant de 10 à 2000, de préférence de 50 à 1000 litres normaux d'H₂ par litre de charge d'alimentation d'hydrocarbure paraffinique ; et/ou
l'hydrocraquage dans le deuxième réacteur est effectué à une température comprise dans une plage allant de 200 °C à 450 °C, de préférence de 220 °C à 430 °C, et plus préférablement de 280 °C à 350°C, une pression comprise dans une plage allant de 0,4 MPa à 8 MPa, de préférence de 1 MPa à 7 MPa, plus préférablement de 2,5 MPa à 7 MPa, une pression partielle d'H₂ à l'entrée du deuxième réacteur comprise dans une plage allant de 0,4 MPa à 8 MPa, de préférence de 1 MPa à 7 MPa, plus préférablement de 2,5 MPa à 7 MPa, une vitesse spatiale horaire en poids comprise dans une plage allant de 0,1 à 10, de préférence de 0,2 à 8, plus préférablement de 0,4 à 6, encore plus préférablement de 0,5 à 1,5 kg d'alimentation du deuxième réacteur par kg de catalyseur par heure, et un rapport d'alimentation en H₂ par rapport à la charge d'alimentation du deuxième réacteur compris dans une plage allant de 10 à 2000, de préférence de 50 à 1000 litres normaux de H₂ par litre d'alimentation du deuxième réacteur ; et/ou
dans lequel le premier réacteur est exploité à une température plus élevée que le deuxième réacteur.

7. Procédé selon l'une quelconque des revendications précédentes, dans lequel l'effluent d'hydroisomérisation comprend au moins 50 % en poids, de préférence au moins 60 % en poids, plus préférablement au moins 70 % en poids, encore plus préférablement au moins 80 % en poids d'isoparaffines par rapport au poids total des paraffines dans l'effluent d'hydroisomérisation ; et/ou au moins 5 % en poids, de préférence au moins 10 % en poids, plus préférablement au moins 15 % en poids, ou au moins 20 % en poids d'isoparaffines à ramifications multiples par rapport au poids total des paraffines dans l'effluent d'hydroisomérisation ; et/ou l'effluent d'hydroisomérisation a un point de trouble inférieur à 0 °C, de préférence inférieur à -5 °C, préférablement inférieur à -8 °C, encore plus préférablement inférieur à -10 °C, ou inférieur à -15 °C (ASTM D 5771-17).

8. Procédé selon l'une quelconque des revendications précédentes, dans lequel le catalyseur d'hydroisomérisation est un catalyseur d'hydroisomérisation bifonctionnel non sulfuré et le catalyseur d'hydrocraquage est un catalyseur d'hydrocraquage bifonctionnel non sulfuré, et lesdits catalyseurs bifonctionnels non sulfurés comprennent au moins un ou plus des métaux choisis parmi les métaux nobles du groupe VIII du tableau périodique, de préférence parmi Pt et/ou Pd, et au moins un ou plus des matériaux poreux acides, et dans lequel la charge d'alimentation en hydrocarbures paraffiniques et la charge d'alimentation du deuxième réacteur comprennent moins de 50 ppm en poids, de préférence moins de 30 ppm en poids, et plus préférablement moins de 10 ppm en poids de soufre par rapport à l'alimentation totale respective (ppm en poids, calculé en tant que soufre élémentaire S), tel que déterminé selon la norme ISO 20846-2019 ; et/ou
dans lequel le catalyseur d'hydroisomérisation et le catalyseur d'hydrocraquage sont différents l'un de l'autre.

9. Procédé selon l'une quelconque des revendications précédentes, dans lequel le catalyseur d'hydrocraquage est un catalyseur d'hydrocraquage bifonctionnel, de préférence un catalyseur d'hydrocraquage bifonctionnel non sulfuré, comprenant
au moins un ou plus des métaux choisis dans le groupe VIII du tableau périodique, Mo, Co et/ou W, de préférence parmi Ni, Mo, Co, W, Pt et/ou Pd, de préférence parmi Pt et/ou Pd ; et
au moins un ou plus des matériaux poreux acides choisis parmi les zéolites, les matériaux de type zéolitique et/ou la silice-alumine amorphe, dans lequel, de préférence, au moins une ou plus des zéolites ou des matériaux de type zéolitique ont un type de structure choisi parmi MFI, BEA, FAU, MOR, FER, AEL, AFI, ATO, AFO, MRE, MTT, MTW, TON et/ou MRT, de préférence au moins un ou plus des matériaux poreux acides choisis parmi SAPO-5, SAPO-11, SAPO-31, SAPO-41, ZSM-22, ZSM-23, ZSM-43, ZSM-48, IZM-2, la mordénite, les zéolites bêta, les zéolites de type Y et/ou la silice-alumine amorphe, de préférence au moins un ou plus des matériaux poreux acides choisis parmi SAPO-5, SAPO-11, ZSM-23, les zéolites bêta, les zéolites de type Y et/ou la silice-alumine amorphe ; et
optionnellement au moins un ou plus des composés suivants : alumine, silice, alumine de titane, dioxyde de titane et/ou zircone.

10. Procédé selon l'une quelconque des revendications précédentes, dans lequel le catalyseur d'hydroisomérisation est un catalyseur d'hydroisomérisation bifonctionnel, de préférence un catalyseur d'hydroisomérisation bifonctionnel non sulfuré, comprenant
au moins un ou plus des métaux choisis dans le groupe VIII du tableau périodique, de préférence parmi les métaux nobles du groupe VIII, plus préférentiellement parmi Pt et/ou Pd ; et
au moins un ou plus des matériaux poreux acides choisis parmi les zéolites et/ou les matériaux de type zéolitique, dans lequel de préférence au moins un ou plus des zéolites et/ou matériaux de type zéolitique ont un type de structure choisi parmi AEL, ATO, AFO, MRE, MTT, MTW, TON, MRT, MOR, FER et/ou MWW, de préférence au moins un ou plus des matériaux poreux acides choisis parmi SAPO-11, SAPO-31, SAPO-41, ZSM-22, ZSM-23, ZSM-48, NU-10, ZBM-30, IZM-2, EU-2 et/ou la mordénite, de préférence au moins un ou plus des matériaux poreux acides choisis parmi SAPO-11, SAPO-41, ZSM-23 et/ou ZSM-48 ; et
optionnellement au moins un ou plusieurs des composés suivants : alumine, silice, silice-alumine amorphe, alumine de titane, dioxyde de titane et/ou dioxyde de zirconium.

11. Procédé selon l'une quelconque des revendications précédentes, dans lequel la charge d'hydrocarbures paraffiniques comprend au moins 70 % en poids, de préférence au moins 80 % en poids, plus préférablement au moins 90 % en poids de paraffines par rapport au poids total de la charge d'hydrocarbures paraffiniques ; et/ou au plus 25 % en poids, de préférence au plus 20 % en poids, plus préférablement au plus 15 % en poids d'isoparaffines par rapport au poids total des paraffines dans la charge d'hydrocarbures paraffiniques ; et/ou au moins 70 % en poids, de préférence au moins 80 % en poids, plus préférablement au moins 90 % en poids, encore plus préférablement au moins 95 % en poids d'hydrocarbures en C12 à C30 par rapport au poids total de la charge d'hydrocarbures paraffiniques ; et/ou au moins 70 % en poids%, de préférence au moins 80 % en poids, plus préférablement au moins 90 % en poids, encore plus préférablement au moins 95 % en poids d'hydrocarbures en C14 à C22 par rapport au poids total de la charge d' hydrocarbures paraffiniques ; et/ou
dans lequel la teneur en carbone biogénique (EN 16640 (2017)) de la charge d'hydrocarbures paraffiniques est d'au moins 50 % en poids, de préférence d'au moins 70 % en poids, plus préférablement d'au moins 90 % en poids, encore plus préférablement d'au moins 95 % en poids, ou environ 100 % en poids par rapport au poids total de carbone (TC) dans la charge d'hydrocarbures paraffiniques.

12. Procédé selon l'une quelconque des revendications précédentes, dans lequel l'étape consistant à fournir la charge d'hydrocarbures paraffiniques comprend les étapes de
soumettre une charge d'hydrotraitement à un hydrotraitement catalytique, de préférence soumettre une charge d'hydrocarbures oxygénés à une hydrodésoxygénation catalytique, pour obtenir un effluent d'hydrotraitement paraffinique, dans lequel la charge d'hydrotraitement comprend de préférence au moins un ou plus des éléments suivants : huiles végétales, graisses animales, huiles microbiennes, déchets et résidus organiques liquéfiés thermiquement et/ou déchets et résidus organiques liquéfiés enzymatiquement, et/ou
soumettre un gaz de synthèse à une conversion Fischer-Tropsch (FT) pour obtenir un effluent FT paraffinique
soumettre l'effluent d'hydrotraitement paraffinique et/ou l'effluent FT paraffinique à une séparation gaz-liquide, et optionnellement à un fractionnement de charge paraffinique pour fournir la charge d'hydrocarbures paraffiniques.

13. Procédé selon l'une quelconque des revendications précédentes, dans lequel, aux étapes iii) et II) au moins un ou plus des composants parmi un composant de carburant d'aviation, un composant de carburant diesel, un composant de carburant essence et/ou un composant de carburant marin sont récupérés du fractionnement, de préférence au moins un composant de carburant d'aviation, préférablement au moins un composant de carburant d'aviation et un composant de carburant diesel, ou au moins un composant de carburant d'aviation et un composant de carburant essence ; et/ou
dans lequel, aux étapes iii) et II), au moins un composant de carburant d'aviation ayant une densité à 15 °C comprise dans une plage allant de 730 kg/m³ à 772 kg/m³ (EN ISO 12185-1996), une température T10 d'au plus 205 °C (EN ISO 3405-2019), un point d'ébullition final d'au plus 300 °C (EN ISO 3405-2019), un point d'éclair d'au moins 38 °C (IP 170-2013, méthode Abel en coupelle fermée) et un point de congélation d'au maximum -40 °C (IP 529-2016) est récupéré du fractionnement ; et/ou
dans lequel le composant de carburant d'aviation est récupéré avec un rendement d'au moins 30 % en poids, de préférence dans une plage allant de 30 % à 90 % en poids du poids total de l'alimentation en hydrocarbures paraffiniques.

14. Système pour produire au moins un composant de carburant de transport liquide, dans lequel le système est configuré pour exécuter un processus utilisant i), ii), iii) ou I), II), III) du système, le système comprenant :
des moyens configurés pour fournir une charge d'hydrocarbures paraffiniques comprenant au moins 60 % en poids de paraffines par rapport au poids total de la charge d'hydrocarbures paraffiniques, dont au plus 30 % en poids sont des isoparaffines ;
un premier réacteur configuré pour soumettre la charge d'hydrocarbures paraffiniques dans le premier réacteur à une hydroisomérisation en présence d'un catalyseur d'hydroisomérisation afin d'obtenir un effluent d'hydroisomérisation ;
un système de fractionnement configuré pour i) soumettre l'effluent d'hydroisomérisation à un fractionnement afin de séparer du fractionnement au moins un flux de recyclage ayant une température T5 (5 % en volume récupéré, EN ISO 3405-2019) de 270 °C ou plus, et pour soumettre un effluent de recyclage à un fractionnement (suivant ii) et iii)) ; et pour II) soumettre un effluent d'hydrocraquage à un fractionnement ;
un deuxième réacteur configuré pour ii) soumettre une deuxième charge d'alimentation de réacteur comprenant le flux de recyclage à un hydrocraquage dans le deuxième réacteur en présence d'un catalyseur d'hydrocraquage afin d'obtenir un effluent de recyclage ; et pout I) soumettre une deuxième charge d'alimentation du réacteur comprenant l'effluent d'hydroisomérisation à un hydrocraquage dans le deuxième réacteur en présence du catalyseur d'hydrocraquage pour obtenir un effluent d'hydrocraquage ;
des conduits configurés pour iii) alimenter le système de fractionnement avec l'effluent de recyclage et l'effluent d'hydroisomérisation, et pour III) alimenter le système de fractionnement avec l'effluent d'hydrocraquage ;
des moyens configurés pour récupérer du système de fractionnement au moins un ou plus de composants liquides de carburant de transport ; et
un dispositif de contrôle configuré pour surveiller des paramètres indicatifs d'une désactivation du catalyseur d'hydroisomérisation afin d'obtenir des valeurs ; pour comparer les valeurs obtenues à des valeurs prédéterminées ; et lorsque les valeurs obtenues atteignent les valeurs prédéterminées, pour commuter de i), ii), iii) à I), II), III) du système.

15. Produit logiciel comprenant des instructions qui, lorsqu'elles sont exécutées par un processeur d'un dispositif de commande dans un système destiné à produire au moins un composant de carburant de transport liquide, amène, dans un procédé selon l'une quelconque des revendications 1 à 13, le dispositif de commande à comparer les valeurs obtenues à des valeurs prédéterminées, et lorsque les valeurs reçues atteignent les valeurs prédéterminées, commuter de i), ii), iii) à I), II).
